# EUROPÄISCHE PATENTSCHRIFT

(11) **EP 4 710 761 B1**
(45) Veröffentlichungstag und Bekanntmachung des Hinweises auf die Patenterteilung: **28.10.2026**
(21) Anmeldenummer: 24200750.8
(22) Anmeldetag: 17.09.2024
(51) Int. Cl.: A01M 1/02, A01M 31/00, G03B 43/00

(54) **VORRICHTUNG UND VERFAHREN ZUM VERSETZEN EINER VORRICHTUNG ZUR ÜBERWACHUNG VON GLIEDERFÜSSERN IN EINEN RUHEZUSTAND**
DEVICE AND METHOD FOR SWITCHING A DEVICE FOR MONITORING ARTHROPODS TO A STANDBY STATE
DISPOSITIF ET PROCEDE DE COMMUTATION D'UN DISPOSITIF DE SURVEILLANCE D'ARTHROPODES DANS UN ETAT DE VEILLE

(43) Veröffentlichungstag der Anmeldung: 18.03.2026
(73) Patentinhaber: Bayer Aktiengesellschaft, 51373 Leverkusen (DE)
(72) Erfinder: Tempel, Matthias, 50935 Köln (DE); Born, Fabian, 57319 Bad Berleburg (DE)
(74) Vertreter: BIP Patents

(56) Entgegenhaltungen:
- WO-A1-2017/020060
- CN-U- 206 557 853
- DE-B3- 102020 210 951
- US-A1- 2019 149 813
- US-A1- 2020 375 094

## Beschreibung

### TECHNISCHES GEBIET

Die vorliegende Offenbarung befasst sich mit dem Überwachen von Gliederfüßern auf Basis von Bildaufnahmen.

Gegenstände der vorliegenden Offenbarung sind ein Verfahren, eine Vorrichtung und ein Computerprogramm.

### EINLEITUNG

WO2020/058175A1 offenbart ein Verfahren, eine Vorrichtung und ein Computerprogramm zum Überwachen von Gliederfüßern. Die Vorrichtung umfasst eine Kamera, mit der eine Bildaufnahme eines Sammelbereichs, in dem sich ein oder mehrere Gliederfüßer aufhalten, erzeugt wird. Die Vorrichtung umfasst eine Sendeeinheit, mit der die Bildaufnahme über ein Netzwerk an ein Computersystem gesandt wird. Auf dem Computersystem kann die Bildaufnahme durch einen Nutzer und/oder automatisiert analysiert werden, z.B. um Gliederfüßer in der Bildaufnahme zu detektieren, zu identifizieren und/oder zu zählen.

Die Vorrichtung ist für den Betrieb in einem Feld für Kulturpflanzen hergerichtet. Für einen autonomen Betrieb der Vorrichtung im Freien weist die Vorrichtung zur Versorgung ihrer elektronischen Komponenten mit elektrischer Energie eine Energieversorgungseinheit wie beispielsweise eine elektrochemische Zelle, einen Akkumulator und/oder eine Solarzelle auf. Energiemanagement spielt bei einer solchen Vorrichtung eine wichtige Rolle; es ist das Ziel, eine solche Vorrichtung autonom über einen langen Zeitraum von mehreren Tagen, Wochen, Monaten oder sogar Jahren zum Überwachen von Gliederfüßern einzusetzen, ohne dass beispielsweise elektrochemische Zellen erneuert werden müssen. Da die Vorrichtung üblicherweise im Freien betrieben wird, besteht die Gefahr, dass die Vorrichtung durch natürliche Ereignisse wie Wind, Regen oder Tiere in einen Zustand versetzt wird, in dem der ordnungsgemäße Betrieb der Vorrichtung nicht mehr gewährleistet ist. Beispielsweise kann die Kamera verdreckt sein oder durch einen Stoß so orientiert sein, dass der Sammelbereich nicht mehr auf einem Bildsensor der Kamera abgebildet wird.

Eine Vorrichtung, die nicht mehr ordnungsgemäß funktioniert, erzeugt unter Umständen aber weiterhin Bildaufnahmen, die an das separate Computersystem versandt werden, nur dass diese Bildaufnahmen ggf. nicht mehr den Sammelbereich abbilden und sich damit nicht mehr zum Überwachen von Gliederfüßern eignen. Eine solche Vorrichtung erzeugt also unter Umständen weiterhin Netzwerkverkehr und damit verbundene Kosten, ohne einen Nutzen zu erbringen.

Die Druckschrift US 2019/149813 A1 beschreibt ein System zur Erkennung, Meldung und Behebung von Kamerafehlern. Das System umfasst eine Kamera und eine Verarbeitungseinheit, die mit Programmanweisungen konfiguriert ist. Die Verarbeitungseinheit ist so konfiguriert, dass sie die von der Kamera empfangenen Bilddaten analysiert und basierend auf der Bildanalyse einen Kamerafehler oder eine Fehlfunktion erkennt.

### ZUSAMMENFASSUNG

Diesen und weiteren Aspekten widmet sich die vorliegende Offenbarung.

Ein erster Gegenstand der vorliegenden Offenbarung ist eine Vorrichtung zum Überwachen von Gliederfüßern nach dem Anspruch 1 umfassend
- eine Kamera und
- eine Steuereinheit,
   wobei die Steuereinheit konfiguriert ist,
- die Kamera zu definierten Zeitpunkten und/oder in definierten Zeitabständen und/oder bei Eintreten definierter Ereignisse zu veranlassen, eine Bildaufnahme von einem Sammelbereich zu erzeugen,
- die von der Kamera erzeugte Bildaufnahme zu analysieren, wobei das Analysieren der Bildaufnahme ein Detektieren, Lokalisieren, Identifizieren und/oder Zählen von Gliederfüßern in der Bildaufnahme umfasst,
- auf Basis der Bildaufnahme eine Funktionsstörung bei der Vorrichtung zu identifizieren, wobei die Funktionsstörung dazu führt, dass Gliederfüßer in der Bildaufnahme nicht mehr korrekt erkannt, lokalisiert, identifiziert und/oder gezählt werden können,
- in Reaktion auf das Identifizieren der Funktionsstörung die Vorrichtung in einen Störungszustand zu versetzen, wobei der Störungszustand dadurch gekennzeichnet ist, dass von der Kamera erzeugte Bildaufnahmen nicht mehr analysiert werden.

Ein weiterer Gegenstand der vorliegenden Offenbarung ist ein computer-implementiertes Verfahren nach dem Anspruch 17 umfassend die Schritte:
- Veranlassen einer Kamera, zu definierten Zeitpunkten und/oder in definierten Zeitabständen und/oder bei Eintreten definierter Ereignisse, eine Bildaufnahme von einem Sammelbereich für Gliederfüßer zu erzeugen, wobei die Kamera und der Sammelbereich Bestandteile einer Vorrichtung zum Überwachen von Gliederfüßern sind,
- Empfangen einer Bildaufnahme von der Kamera,
- Analysieren der Bildaufnahme, wobei das Analysieren der Bildaufnahme ein Detektieren, Lokalisieren, Identifizieren und/oder Zählen von Gliederfüßern in der Bildaufnahme umfasst,
- Identifizieren einer Funktionsstörung bei der Vorrichtung auf Basis der Bildaufnahme, wobei die Funktionsstörung dazu führt, dass Gliederfüßer in der Bildaufnahme nicht mehr korrekt erkannt, lokalisiert, identifiziert und/oder gezählt werden können,
- in Reaktion auf das Identifizieren der Funktionsstörung: Versetzen der Vorrichtung in einen Störungszustand, wobei der Störungszustand dadurch gekennzeichnet ist, dass von der Kamera erzeugte Bildaufnahmen nicht mehr analysiert werden.

Ein weiterer Gegenstand der vorliegenden Offenbarung ist ein nicht-flüchtiges computerlesbares Speichermedium nach dem Anspruch 18, auf dem ein Computerprogramm gespeichert ist, das, wenn es von einer Steuereinheit einer Vorrichtung zum Überwachen von Gliederfüßern ausgeführt wird, die Steuereinheit veranlasst folgende Schritte auszuführen:
- Veranlassen einer Kamera, zu definierten Zeitpunkten und/oder in definierten Zeitabständen und/oder bei Eintreten definierter Ereignisse, eine Bildaufnahme von einem Sammelbereich für Gliederfüßer zu erzeugen,
- Empfangen einer Bildaufnahme von der Kamera,
- Analysieren der Bildaufnahme, wobei das Analysieren der Bildaufnahme ein Detektieren, Lokalisieren, Identifizieren und/oder Zählen von Gliederfüßern in der Bildaufnahme umfasst,
- Identifizieren einer Funktionsstörung bei der Vorrichtung auf Basis der Bildaufnahme, wobei die Funktionsstörung dazu führt, dass Gliederfüßer in der Bildaufnahme nicht mehr korrekt erkannt, lokalisiert, identifiziert und/oder gezählt werden können,
- in Reaktion auf das Identifizieren der Funktionsstörung: Versetzen der Vorrichtung in einen Störungszustand, wobei der Störungszustand dadurch gekennzeichnet ist, dass von der Kamera erzeugte Bildaufnahmen nicht mehr analysiert werden.

### KURZE BESCHREIBUNG DER ZEICHNUNGEN

Fig. 1 zeigt eine Ausführungsform des computer-implementierten Verfahrens der vorliegenden Offenbarung in Form eines Ablaufschemas.
Fig. 2 zeigt beispielhaft und schematisch eine Ausführungsform der Vorrichtung der vorliegenden Offenbarung.

### AUSFÜHRLICHE OFFENBARUNG

Die Gegenstände der vorliegenden Offenbarung werden im Folgenden näher erläutert, ohne zwischen den Gegenständen der vorliegenden Offenbarung (Verfahren, Vorrichtung, Computerprogramm) zu unterscheiden. Vielmehr sollen die nachfolgenden Ausführungen sinngemäß für alle Gegenstände der Erfindung gelten, unabhängig davon, in welchem Zusammenhang (Verfahren, Vorrichtung, Computerprogramm) sie beschrieben werden.

Wenn in der vorliegenden Beschreibung oder in den Ansprüchen Schritte in einer Reihenfolge angegeben sind, bedeutet dies nicht unbedingt, dass die Offenbarung auf die angegebene Reihenfolge beschränkt ist. Vielmehr ist es denkbar, dass die Schritte auch in einer anderen Reihenfolge oder auch parallel zueinander ausgeführt werden können, es sei denn, dass zum Beispiel ein Schritt auf einem anderen aufbaut, was erfordert, dass der aufbauende Schritt anschließend ausgeführt wird (dies wird aber im Einzelfall klar). Die angegeben Reihenfolgen sind somit beispielhafte Ausführungsformen der vorliegenden Offenbarung.

Die Gegenstände der vorliegenden Offenbarung werden an einigen Stellen in Bezug auf Zeichnungen näher erläutert. Dabei sind in den Zeichnungen konkrete Ausführungsformen mit konkreten Merkmalen und Merkmalskombinationen dargestellt, die in erster Linie der Veranschaulichung dienen; die vorliegende Offenbarung soll nicht so verstanden werden, dass sie auf die in den Zeichnungen dargestellten Merkmale und Merkmalskombinationen beschränkt ist. Ferner sollen Aussagen, die bei der Beschreibung der Zeichnungen in Bezug auf Merkmale und Merkmalskombinationen getroffen werden, allgemein gelten, das heißt auch auf andere Ausführungsformen übertragbar und nicht auf die gezeigten Ausführungsformen beschränkt sein.

Der Artikel "ein" bedeutet "ein oder mehrere"; es sei denn es steht z.B. ein "nur" oder "lediglich" davor. Dies gilt analog auch für den Artikel "eine".

Die Ausdrücke "basierend auf" und "auf Basis von" bedeuten "zumindest teilweise basierend auf", sofern nicht ausdrücklich etwas anderes angegeben ist.

Der Begriff "oder" ist nicht als exklusives "oder" zu verstehen, d.h. der Ausdruck "A oder B" umfasst "A", "B" sowie "A und B".

Ansonsten haben die in dieser Offenbarung verwendeten Begriffe die Bedeutung, die sie im Stand der Technik, insbesondere in dem in dieser Offenbarung angeführten Stand der Technik haben.

Ein Gegenstand der vorliegenden Offenbarung ist eine Vorrichtung zum Überwachen von Gliederfüßern.

"Gliederfüßer" (Arthropoden) sind eine vielfältige Gruppe wirbelloser Tiere, die zum Stamm der Arthropoda gehören.

Gliederfüßer spielen in Ökosystemen eine wichtige Rolle als Bestäuber, Zersetzer und/oder als Teil des Nahrungsnetzes. Sie können auch von wirtschaftlicher Bedeutung sein, sowohl zum Nutzen (z.B. Bestäubung, Seidenproduktion) als auch zum Nachteil (z.B. als Schädlinge in der Landwirtschaft, Überträger von Krankheiten).

Gliederfüßer werden in mehrere Gruppen (Subphyla und Klassen) eingeteilt, darunter Insekten und Spinnentiere.

In einer Ausführungsform der vorliegenden Offenlegung bezieht sich der Begriff "Gliederfüßer" ausschließlich auf Insekten und Spinnentiere.

In einer anderen Ausführungsform der vorliegenden Offenbarung bezieht sich der Begriff "Gliederfüßer" ausschließlich auf Insekten.

In einer anderen Ausführungsform der vorliegenden Offenbarung bezieht sich der Begriff "Gliederfüßer" ausschließlich auf erwachsene Insekten.

In einer anderen Ausführungsform der vorliegenden Offenbarung bezieht sich der Begriff "Gliederfüßer" ausschließlich auf Insekten in Form von Raupen.

In einer anderen Ausführungsform der vorliegenden Offenbarung bezieht sich der Begriff "Gliederfüßer" ausschließlich auf Spinnentiere.

In einer anderen Ausführungsform der vorliegenden Offenbarung bezieht sich der Begriff "Gliederfüßer" ausschließlich auf Milben.

Der Begriff "Überwachen" bedeutet üblicherweise, dass mit Hilfe der Vorrichtung die Anwesenheit eines oder mehrerer Gliederfüßer in einem Bereich (z.B. in einem Feld für den Anbau von Kulturpflanzen) festgestellt werden kann.

Die Vorrichtung weist Mittel zum Erzeugen von Bildaufnahmen auf. Dabei handelt es sich üblicherweise um eine oder mehrere Kameras.

Eine "Kamera" ist ein Gerät oder System, das dazu bestimmt ist, Bildaufnahmen von externen Objekten und Phänomenen zu erfassen und aufzuzeichnen. Eine Kamera nutzt dazu beispielsweise elektromagnetische Strahlung, Schallwellen oder andere physikalische Vorgänge, die visuell dargestellt werden können. Die Kamera wandelt empfangene Signale (z.B. optische oder akustische) in andere Signale (z.B. elektrische) und/oder Daten um, die gespeichert, verarbeitet, angezeigt und/oder übertragen werden können. Der Begriff "Kamera" umfasst Geräte, die mit allen Medien oder Technologien arbeiten, einschließlich analoger und digitaler, optischer, elektronischer, chemischer oder anderer Methoden der Bilderfassung. Der Begriff "Kamera" umfasst ein breites Spektrum von Geräten einschließlich, aber nicht beschränkt auf Fotokameras, Videokameras, Wärmebildkameras, Radarsysteme, Ultraschall-Bildgebungsgeräte, Elektronenmikroskope und alle künftigen Technologien, die die Funktion der Bilderfassung erfüllen können.

In einer Ausführungsform der vorliegenden Offenbarung ist die Kamera eine Digitalkamera, die mit Hilfe eines oder mehrerer Bildsensoren zweidimensionale Abbilder aus Licht auf elektrischem Weg erzeugt. Üblicherweise handelt es sich um halbleiterbasierte Bildsensoren wie beispielsweise CCD-(CCD = *charge-coupled device*) oder CMOS-Sensoren (CMOS = *complementary metal-oxide-semiconductor*). Optische Elemente wie Linsen, Blenden und dergleichen dienen einer möglichst scharfen Abbildung von Gliederfüßern im Sammelbereich auf dem Bildsensor. Eine Digitalkamera ist konfiguriert, digitale Bildaufnahmen zu erzeugen.

Digitale Bildaufnahmen können mit Computersystemen und Computerprogrammen verarbeitet, bearbeitet und reproduziert sowie in standardisierte Datenformate konvertiert werden, wie zum Beispiel JPEG (Grafikformat der Joint Photographic Experts Group), PNG (Portable Network Graphics) oder SVG (Scalable Vector Graphics). Digitale Bildaufnahmen können mit geeigneten Anzeigegeräten visualisiert werden, wie zum Beispiel mit Computermonitoren, Projektoren und/oder Druckern.

Die mindestens eine Kamera ist auf einen Sammelbereich gerichtet. Mit anderen Worten: die Kamera ist so ausgerichtet und konfiguriert, dass sie Bildaufnahmen von dem Sammelbereich oder einem Teil davon erzeugt.

Die Kamera wird dazu verwendet, digitale Bildaufnahmen von dem Sammelbereich oder einem Teil davon zu erzeugen. Die erzeugten Bildaufnahmen können verwendet werden, (i) um zu erkennen, ob sich ein oder mehrere Gliederfüßer in dem abgebildeten Sammelbereich befinden (Detektieren von Gliederfüßern), (ii) die Position eines Gliederfüßers in der Bildaufnahme zu bestimmen (Lokalisieren von Gliederfüßern), (iii) Gliederfüßer in dem abgebildeten Sammelbereich zu zählen und/oder (iv) Gliederfüßer zu identifizieren, d.h. festzustellen, um welchen Gliederfüßer (z.B. Unterklasse, Überordnung, Ordnung, Unterordnung, Familie, Gattung, Art, Stadium, Nützling, Schädling) es sich handelt.

Der Sammelbereich ist ein Bereich, der von Gliederfüßern aufgesucht werden kann. Es kann sich dabei um eine ebene Oberfläche einer Tafel oder Karte oder dergleichen handeln. Es kann sich auch um den Boden eines Behälters handeln. Es kann sich auch um eine Flüssigkeit in einem Behälter handeln. Es kann sich auch um einen Teil einer Pflanze handeln, beispielsweise ein Blatt oder eine Frucht oder ein anderer Teil einer Pflanze.

Der Sammelbereich kann ein Bestandteil der Vorrichtung sein oder davon unabhängig sein.

In einer Ausführungsform der vorliegenden Offenbarung ist der Sammelbereich ein Teil einer Fangvorrichtung für Gliederfüßer. Die Fangvorrichtung kann ein Bestandteil der Vorrichtung sein oder davon unabhängig sein.

In einer Ausführungsform der vorliegenden Offenbarung umfasst die Fangvorrichtung einen mit einer Flüssigkeit gefüllten Behälter, z.B. eine Fangschale, wie sie in WO2020/058175A1, WO2020/058170A1, WO2021/213824A1 oder WO2022/243150A1 beschrieben ist.

In einer Ausführungsform der vorliegenden Offenbarung umfasst die Fangvorrichtung eine mit einem Klebemittel versehene Oberfläche, wie sie in beispielsweise in WO2023/043871A1, WO2018/131853A1 oder WO2004/095919A2 beschrieben ist.

In einer Ausführungsform der vorliegenden Offenbarung umfasst die Fangvorrichtung einen zeltartigen Rahmen, der einen Innenraum definiert, in den Gliederfüßer gelangen können. Solche Fangvorrichtungen sind auch unter der Bezeichnung Delta-Falle bekannt (siehe z.B. WO2018/078638A1); sie können jedoch andere Formen als die Form eines Prismas aufweisen.

Als Lockmittel kann der Sammelbereich in einer Farbe gestaltet sein (z.B. gelb oder rot), die spezifische Gliederfüßer anlockt. Neben oder anstelle einer Farbe können weitere/andere Mittel vorhanden sein, die Gliederfüßer anlocken (Lockmittel). Denkbar ist zum Beispiel die Verwendung eines Pheromons oder eines Duftstoffes, der z.B. eine Nahrungsquelle vortäuscht. Auch der Einsatz einer Quelle für elektromagnetische Strahlung im infraroten, sichtbaren und/oder ultravioletten Bereich zum Anlocken von (spezifischen) Gliederfüßern ist denkbar. Auch der Einsatz von Geräuschen, die beispielsweise paarungswillige Männchen und/oder Weibchen imitieren, ist denkbar. Auch der Einsatz von speziellen Mustern, die zum Beispiel eine Pflanze imitieren, ist denkbar.

Im Falle der Verwendung eines mit einer Flüssigkeit gefüllten Behälters kann dieser mit Wasser und optional mit einem oder mehreren Zusätzen gefüllt sein. Ein solcher Zusatz kann beispielsweise ein Tensid zur Erniedrigung der Oberflächenspannung sein. Ein solcher Zusatz kann auch ein Lockstoff zum Anlocken von (spezifischen) Gliederfüßern sein. Ein solcher Zusatz kann auch ein Mittel zur Verhinderung von Algenbildung (beispielsweise ein Herbizid) sein.

Im Falle einer Karte oder Tafel kann diese mit einem Klebstoff versehen sein, um Gliederfüßer bewegungsunfähig zu machen.

Zur Abbildung des Sammelbereichs auf einem oder mehreren Bildsensoren ist eine Lichtquelle erforderlich, mit der der Sammelbereich beleuchtet wird, so dass Licht (elektromagnetische Strahlung im infraroten, sichtbaren und/oder ultravioletten Bereich des Spektrums) vom beleuchteten Sammelbereich in Richtung Kamera gestreut/reflektiert wird. Hierzu kann das Tageslicht verwendet werden. Es ist aber auch denkbar, eine Beleuchtungseinheit zu verwenden, die für eine definierte, vom Tageslicht unabhängige Beleuchtung sorgt. Diese ist vorzugsweise seitlich neben der Kamera angebracht, so dass es zu keinem Schattenwurf der Kamera auf den Sammelbereich kommt.

Es ist auch denkbar, eine Beleuchtungsquelle unterhalb des Sammelbereichs und/oder neben dem Sammelbereich zu positionieren, die den Sammelbereich "von unten" und/oder "von der Seite" beleuchtet, während eine Kamera eine oder mehrere Bildaufnahmen "von oben" erzeugt.

Es denkbar, dass mehrere Beleuchtungsquellen den Sammelbereich aus unterschiedlichen Richtungen beleuchten.

Der Begriff "Licht" und "Beleuchtung" soll im Übrigen nicht bedeuten, dass der Spektralbereich auf sichtbares Licht (etwa 380 nm bis etwa 780 nm) beschränkt ist. Es ist ebenso denkbar, dass zur Beleuchtung elektromagnetische Strahlung mit einer Wellenlänge unterhalb von 380 nm (ultraviolettes Licht: 100 nm bis 380 nm) oder oberhalb von 780 nm (infrarotes Licht: 780 nm bis 1000 µm) verwendet wird. Der Bildsensor und die optischen Elemente sind üblicherweise an die verwendete elektromagnetische Strahlung angepasst.

Die Vorrichtung kann eine Sendeeinheit umfassen, um Informationen über ein Netzwerk an ein separates Computersystem zu übermitteln. Diese Informationen können beispielsweise Bildaufnahmen des Sammelbereichs sein. Diese Informationen können Ergebnisse einer Analyse einer Bildaufnahme sein, zum Beispiel die Zahl der in einer Bildaufnahme abgebildeten Gliederfüßer, identifizierte Spezies und/oder Mitteilungen zum Status der Vorrichtung.

Die Sendeeinheit kann so ausgestaltet sein, dass sie Informationen über ein Mobilfunknetz (z.B. GSM: *Global System for Mobile Communications,* GPRS: *General Packet Radio Service*; UMTS: *Universal Mobile Telecommunications System,* LTE: *Long Term Evolution*), über ein WLAN (*Wireless Local Artea Network*)*,* über Bluetooth, über DECT (*Digital Enhanced Cordless Telecommunications*) über ein Low-Power-Wide-Area-Netzwerk (*Low Power Wide Area Network* (LPWAN oder LPN)) wie beispielsweise ein NarrowBand IoT Netzwerk und/oder über eine Kombination aus verschiedenen Übertragungswegen übermittelt.

Die Sendeeinheit kann so ausgestaltet sein, dass sie Informationen über eine kurzreichweitige Funkverbindung (z.B. Bluetooth) an eine Basisstation übermittelt, von der die Informationen dann kabelgebunden und/oder über eine langreichweitige Funkverbindung (z.B. ein Mobilfunknetz) weitergeleitet werden.

In einer Ausführungsform der vorliegenden Offenbarung umfasst die Sendeeinheit ein Modem und eine Antenne zum Versenden von Informationen über ein GSM-, GPRS-, 2G-, 3G-, LTE-, 4G-, 5G-, 6G-Mobilfunknetzwerk oder über ein anderes Mobilfunknetzwerk.

Die Vorrichtung weist Mittel zur Energieversorgung auf. Die Vorrichtung ist für einen autonomen Betrieb im Freien für einen Zeitraum von mehreren Tagen, Wochen, Monaten oder sogar Jahren hergerichtet. Die Mittel zur Energieversorgung umfassen z.B. eine oder mehrere elektrochemischen Zellen, Akkumulatoren, Solarzellen, Brennstoffzellen und/oder Generatoren (z.B. in Kombination mit einem Windrad).

Die Vorrichtung kann so ausgestaltet sein, dass sie elektrische Energie aus der Umgebung der Vorrichtung gewinnt. Die Energie aus der Umgebung kann beispielsweise in Form von Licht, elektrischen Feldern, magnetischen Feldern, elektromagnetischen Felder, Bewegung, Druck und/oder Wärme und/oder anderen Energieformen bereitgestellt und durch die Vorrichtung genutzt oder "geerntet" werden. Diese Art der elektrischen Energieerzeugung ist als Energy Harvesting bekannt. Mit "Energy Harvesting" werden im Bereich der Elektronik Verfahren bezeichnet, mit denen kleinste Mengen frei verfügbarer Energie aus der Umgebung gewonnen und gespeichert werden können. Diese Technik ermöglicht es, eine Vorrichtung während ihrer gesamten Lebensdauer mit Energie zu versorgen. Energy Harvesting Systeme umfassen üblicherweise einen Energiewandler, eine Energiemanagementeinheit mit einem Energiespeicher, der üblicherweise ein Kondensator ist. Der Energiewandler, auch Mikrogenerator genannt, wandelt Energie aus der Umgebung in elektrische Energie um. Für die Umwandlung können beispielsweise der piezoelektrische Effekt, der thermoelektrische Effekt oder der photoelektrische Effekt genutzt werden. Weitere Details sind im Stand der Technik beschrieben (siehe z.B. http://www.harvesting-energy.de/ und die dort aufgeführten Publikationen).

In einer Ausführungsform umfasst die Vorrichtung eine oder mehrere Solarzellen und einen oder mehrere Akkumulatoren zur Energieversorgung. Die mindestens eine Solarzelle und der mindestens eine Akkumulator sind so miteinander verbunden, dass die Solarzelle den Akkumulator auflädt, wenn elektromagnetische Strahlung (z.B. Sonnenlicht) auf die mindestens eine Solarzelle trifft.

Die Vorrichtung umfasst ferner eine Steuereinheit.

Die Steuereinheit dient der Steuerung der elektrischen/elektronischen Komponenten der Vorrichtung und/oder zum Verarbeiten von Signalen und/oder Daten. Die Steuereinheit umfasst üblicherweise eine Prozessoreinheit, einen Programmspeicher und einen Arbeitsspeicher. Die Steuereinheit kann ferner einen nicht-flüchtigen Datenspeicher umfassen, der beispielsweise als Halbleiterspeicher ausgeführt ist, und der zum Beispiel zum Speichern von Bildaufnahmen, Messwerten, Analysemodelle und/oder von Ergebnissen von Analysen dienen kann. Die Steuereinheit kann konfiguriert sein, mit Hilfe eines GPS-Empfängers die Position der Vorrichtung zu bestimmen. Die Steuereinheit kann konfiguriert sein, mit Hilfe der Kamera Bildaufnahmen vom Sammelbereich zu erzeugen. Die Steuereinheit kann konfiguriert sein, die Kamera zu veranlassen, eine Bildaufnahmen vom Sammelbereich zu erzeugen. Die Steuereinheit kann konfiguriert sein, die Kamera zu definierten Zeitpunkten und/oder in definierten Zeitabständen und/oder bei Eintreten definierter Ereignisse zu veranlassen, eine Bildaufnahme vom Sammelbereich zu erzeugen. Die Steuereinheit kann konfiguriert sein, Bildaufnahmen, Messwerte, Analysenergebnisse, Geokoordinaten und/oder andere Informationen mit Hilfe der Sendeeinheit an ein separates Computersystem zu übermitteln. Die Steuereinheit kann konfiguriert sein, Bildaufnahmen von der Kamera zu empfangen und/oder Bildaufnahmen von der Kamera abzurufen und/oder Bildaufnahmen aus einem Datenspeicher, der ein Bestandteil der Vorrichtung sein kann, auszulesen.

Die Steuereinheit kann konfiguriert sein, in Bildaufnahmen abgebildete Gliederfüßer zu detektieren, zu lokalisieren, zu zählen und/oder zu identifizieren. Dies kann z.B. mit Hilfe eines trainierten Modells des maschinellen Lernens erfolgen. Ein solches Modell des maschinellen Lernens kann konfiguriert und trainiert sein, in Bildaufnahmen abgebildete Gliederfüßer zu detektieren, zu lokalisieren, zu zählen und/oder zu identifizieren. Details zum automatisierten Detektieren, Lokalisieren, Zählen und/oder Identifizieren von Gliederfüßer in Bildaufnahmen sind in Veröffentlichungen zu diesem Thema beschrieben (siehe z.B.: D. C. K. Amarathunga et al.: Methods of Insect Image Capture and Classification: A Systematic Literature Review, Smart Agricultural Technology, Volume 1, 2021, 100023; C. Zhu et al.: Insect Identification and Counting in Stored Grain: Image Processing Approach and Application Embedded in Smartphones, Mob. Inf. Syst. 2018, 5491706:1-5, WO2020058175A1, WO2020058170A1).

In einer Ausführungsform der vorliegenden Erfindung ist die Steuereinheit konfiguriert, zwischen mindestens zwei Zuständen zu wechseln, einem Ruhezustand (engl. *sleep mode*) und einem Aktivzustand (engl. *active mode* oder *fully operational mode*).

Der "Ruhezustand" kann ein Zustand mit geringerer Leistungsaufnahme (im Vergleich zum Aktivzustand) sein, in den die Vorrichtung versetzt werden kann, um Energie zu sparen. Es ist möglich, dass die Vorrichtung im Ruhezustand in der Lage ist, bei Eintreten eines definierten Ereignisses wieder den vollen Betrieb aufzunehmen. Es ist möglich, dass die Vorrichtung im Ruhezustand ihre Funktionen anhält und den Stromverbrauch verschiedener Komponenten wie Prozessor, GPS-Empfänger, Kamera, Statusanzeigen, Beleuchtung und anderer ggf. vorhandener Peripheriegeräte und/oder Bestandteile reduziert. Ein "Ruhezustand", in dem die Vorrichtung in der Lage ist, ihren vollen Betrieb wieder aufzunehmen, wird in dieser Offenbarung auch als "Energiesparzustand" bezeichnet.

Der Begriff "Aktivzustand" bezieht sich auf den Betriebszustand, in dem die Vorrichtung alle Aufgaben gemäß ihrer Konfiguration zum Überwachen von Gliederfüßern ausführt. Dazu gehört beispielsweise das Erzeugen von Bildaufnahmen des Sammelbereichs. Dazu kann das Speichern und/oder Übermitteln von Bildaufnahmen und/oder anderen Informationen an ein separates Computersystem zählen. Dazu kann das Analysieren von Bildaufnahmen zählen. Eine solche Analyse kann das Erkennen, Lokalisieren, Identifizieren und/oder Zählen von Gliederfüßern in den Bildaufnahmen umfassen.

Neben dem "Ruhezustand" und dem "Aktivzustand" kann es einen "Aus-Zustand" geben. Der "Aus-Zustand" kann dadurch gekennzeichnet sein, dass die Vorrichtung in dem "Aus-Zustand" keine Energie verbraucht. Die Vorrichtung kann in dem "Aus-Zustand" ausgeschaltet sein. Es ist möglich, dass die Vorrichtung erst durch ein manuelles Einschalten aus dem "Aus-Zustand" wieder in einen Betriebszustand (z.B. den Aktivzustand) versetzt werden kann. Ein "Aus-Zustand" ist üblicherweise ein Zustand, in dem die Vorrichtung nicht mehr von sich aus in einen Betriebszustand (z.B. den Aktivzustand) wechseln kann.

In einer Ausführungsform der vorliegenden Offenbarung ist die Steuereinheit konfiguriert, die Vorrichtung zu definierten Zeitpunkten und/oder in definierten Zeitabständen und/oder bei Eintreten definierter Ereignisse aus dem Ruhezustand in den Aktivzustand zu versetzen und die Kamera zu veranlassen, eine Bildaufnahme des Sammelbereichs zu erzeugen.

In einer Ausführungsform der vorliegenden Offenbarung ist die Steuereinheit konfiguriert, die Vorrichtung zu definierten Zeitpunkten und/oder in definierten Zeitabständen und/oder bei Eintreten definierter Ereignisse aus dem Ruhezustand in den Aktivzustand zu versetzen, die Kamera zu veranlassen, eine Bildaufnahme des Sammelbereichs zu erzeugen, die Bildaufnahme in einem Datenspeicher zu speichern und die Vorrichtung anschließend aus dem Aktivzustand wieder in den Ruhezustand zu versetzen.

In einer Ausführungsform der vorliegenden Offenbarung ist die Steuereinheit konfiguriert, die Vorrichtung zu definierten Zeitpunkten und/oder in definierten Zeitabständen und/oder bei Eintreten definierter Ereignisse aus dem Ruhezustand in den Aktivzustand zu versetzen, die Kamera zu veranlassen, eine Bildaufnahme des Sammelbereichs zu erzeugen, optional die Bildaufnahme zu komprimieren, und die Sendeeinheit zu veranlassen, die komprimierte Bildaufnahme über eine Netzwerkverbindung (z.B. zumindest anteilig über ein Mobilfunknetz) an ein separates Computersystem zu übermitteln, und die Vorrichtung anschließend aus dem Aktivzustand wieder in den Ruhezustand zu versetzen.

In einer Ausführungsform der vorliegenden Offenbarung ist die Steuereinheit konfiguriert, die Vorrichtung zu definierten Zeitpunkten und/oder in definierten Zeitabständen und/oder bei Eintreten definierter Ereignisse aus dem Ruhezustand in den Aktivzustand zu versetzen, die Kamera zu veranlassen, eine Bildaufnahme des Sammelbereichs zu erzeugen, die Bildaufnahme zu analysieren, um ein oder mehrere Gliederfüßer in der Bildaufnahme zu detektieren, zu lokalisieren, zu identifizieren und/oder zu zählen, die Ergebnisse der Analyse in einem Datenspeicher zu speichern und/oder (optional zusammen mit der Bildaufnahme oder einer komprimierten Version davon) über eine Netzwerkverbindung (z.B. zumindest anteilig über ein Mobilfunknetz) an ein separates Computersystem zu übermitteln, und die Vorrichtung anschließend aus dem Aktivzustand wieder in den Ruhezustand zu versetzen.

Im Aktivzustand ist die Steuereinheit konfiguriert, auf Basis einer Bildaufnahme eine Funktionsstörung bei der Vorrichtung zu identifizieren. Die Steuereinheit kann konfiguriert sein, jede von der Kamera erzeugte Bildaufnahme einer Prüfung auf das Vorhandensein einer Funktionsstörung zu unterziehen. Die Steuereinheit kann konfiguriert sein, jede n-te von der Kamera erzeugte Bildaufnahme einer Prüfung auf das Vorhandensein einer Funktionsstörung zu unterziehen, wobei n eine ganze Zahl größer als 1 ist. Die Steuereinheit kann konfiguriert sein, nach dem Zufallsprinzip eine erzeugte Bildaufnahme einer Prüfung auf das Vorhandensein einer Funktionsstörung zu unterziehen. Die Steuereinheit kann konfiguriert sein, einen vordefinierten Prozentsatz der erzeugten Bildaufnahmen einer Prüfung auf das Vorhandensein einer Funktionsstörung zu unterziehen. Die Steuereinheit kann konfiguriert sein, bei Eintreten eines definierten Ereignisses eine erzeugte Bildaufnahme einer Prüfung auf das Vorhandensein einer Funktionsstörung zu unterziehen. Die Steuereinheit kann konfiguriert sein, eine definierte Zahl von Bildaufnahmen in einer definierten Zeitspanne einer Prüfung auf das Vorhandensein einer Funktionsstörung zu unterziehen, z.B. an jedem neuen Tag die erste, die erzeugt wird.

Eine Funktionsstörung kennzeichnet einen Zustand der Vorrichtung, der eine oder mehrere Bestandteile der Vorrichtung oder die Vorrichtung als Ganzes so beeinflusst, dass eine oder mehrere Funktionen nicht mehr oder nicht mehr ausreichend oder nicht mehr optimal ausgeführt werden. Eine Funktion kann beispielsweise dann nicht mehr ausreichend oder nicht mehr optimal ausgeführt werden, wenn die Funktionsstörung die Funktion verlangsamt oder erschwert oder das Ergebnis minderwertig ist oder das Ergebnis fehlerhaft ist.

Liegt eine Funktionsstörung vor, kann es sein, dass ein weiterer Betrieb der Vorrichtung nicht mehr sinnvoll ist. Liegt eine Funktionsstörung vor, ist es denkbar, dass Bildaufnahmen erzeugt werden, die nicht mehr analysiert werden können, um Gliederfüßer zu erkennen, zu lokalisieren, zu identifizieren und/oder zu zählen. Liegt eine Funktionsstörung vor, ist es möglich, dass ein Erzeugen und/oder Speichern und/oder Übermitteln von Bildaufnahmen an ein separates Computersystem nicht sinnvoll ist, da die Bildaufnahmen nicht geeignet sind, um Gliederfüßer in einem Bereich (z.B. einem Feld für den Anbau von Kulturpflanzen) zu überwachen.

Nachfolgend sind Beispiele für Funktionsstörungen und/oder Ursachen von Funktionsstörungen aufgeführt, ohne die Erfindung auf diese Beispiele beschränken zu wollen:
- Sammelbereich ist verschmutzt: Es ist möglich, dass sich in dem Sammelbereich Verunreinigungen angesammelt haben, die ein Detektieren, Lokaliseren, Zählen und/oder Identifizieren von Insekten erschweren. Verunreinigungen können Insekten ganz oder teilweise verdecken oder mit ihnen verklumpen (Agglomerate bilden). Verschmutzungen können Blätter und/oder andere Pflanzenteile, Staub, Ausscheidungen von Gliederfüßern und/oder anderen Tieren und/oder dergleichen sein.
- Sammelbereich ist ausgeschöpft: Es ist möglich, dass sich in dem Sammelbereich bereits eine Vielzahl an Gliederfüßern gesammelt hat, die sich ganz oder teilweise überlagern und/oder zu Ansammlungen aggregieren. Dadurch kann das automatisierte Detektieren, Lokalisieren, Zählen und/oder Identifizieren der Gliederfüßer beeinträchtigt werden.
- Algenbildung im Sammelbereich: Es ist möglich, dass sich in einer Flüssigkeit im Sammelbereich Algen bilden. Die Algen können das automatisierte Detektieren, Lokalisieren, Zählen und/oder Identifizieren von Gliederfüßern im Sammelbereich erschweren.
- Schaum im Sammelbereich: Bei einer mit Flüssigkeit gefüllten Fangschale kann sich im Laufe der Zeit Schaum auf der Flüssigkeit bilden. Dieser Schaum kann die Sicht auf Gliederfüßer im Sammelbereich ganz oder teilweise versperren. Zudem ist es möglich, dass Gliederfüßer nicht mehr durch die Flüssigkeit immobilisiert werden.
- Einschränkungen des Sichtfeldes: Es ist möglich, dass Spinnenweben in der Vorrichtung bewirken, dass die Kamera keine freie Sicht mehr auf den Sammelbereich hat. Neben den Spinnenweben können auch Spinnen, die sich vor einer Linse der Kamera aufhalten, ein Problem darstellen. Ferner können auch Konstrukte von Gliederfüßern (z.B. Puppen von Larven) und/oder Pflanzenteile (z.B. Zweige, Blätter, Wurzeln) in der Vorrichtung den Sammelbereich aus Sicht der Kamera ganz oder teilweise verdecken.
- Kamera und/oder optische Elemente sind verschmutzt: Ablagerungen auf einer Linse der Kamera können zu einer Beeinträchtigung führen. Es ist möglich, dass infolge einer Ablagerung das Sichtfeld der Kamera eingeschränkt ist und nicht mehr der komplette ursprüngliche Sammelbereich abgebildet wird. Es ist denkbar, dass Ablagerungen zu unscharfen oder teilweise unscharfen Bildaufnahmen führen. Es ist möglich, dass Wasser (z.B. Regenwasser) und/oder eine andere Flüssigkeit (z.B. eine Flüssigkeit aus dem Sammelbereich) auf eine Linse gelangt und das Sichtfeld einschränkt und/oder zu Unschärfen in der Bildaufnahme führt.
- Beleuchtungsquelle(n) defekt und/oder verschmutzt: Ist die Vorrichtung mit einer oder mehreren Beleuchtungsquellen ausgestattet, kann es sein, dass eine oder mehrere dieser Beleuchtungsquellen keine oder weniger elektromagnetische Strahlung aussendet und/oder, dass infolge einer Verunreinigung der einen oder der mehreren Beleuchtungsquellen nicht mehr genügend elektromagnetische Strahlung in den Sammelbereich gelangt und diesen ausleuchtet. Die fehlende oder verringerte Beleuchtung kann zu einem Kontrastverlust und/oder erhöhtem Rauschen in den Bildaufnahmen führen, was wiederum das automatisierte Detektieren, Lokalisieren, Zählen und/oder Identifizieren von Gliederfüßern erschweren kann.
- Unerwünschte Reflexe: Es ist möglich, dass zu bestimmten Zeiten Reflexe in den Bildaufnahmen zu beobachten sind, die z.B. von Sonnenlicht stammen können, das unter einem definierten Winkelbereich in den Sammelbereich gelangt. Es ist möglich, dass Sonnenlicht zu bestimmten Tages- und/oder Jahreszeiten in den Sammelbereich gelangt und dort unerwünschte Reflexionen verursacht. Es ist möglich, dass solche unerwünschten Reflexionen durch Sonnenlicht beim Aufstellen der Vorrichtung nicht beobachtet wurden und/oder erst später in Erscheinung traten. Es ist möglich, dass die Vorrichtung durch Wind und/oder durch ein Tier und/oder Niederschlag aus ihrer ursprünglichen Position und/oder Lage in eine andere Position und/oder Lage gebracht wurde, bei der die Reflexionen auftreten.
- Positions-/ und/oder Lageänderung von Bestandteilen der Vorrichtung und/oder der Vorrichtung als Ganzes: Es ist denkbar, dass es im Lauf der Zeit zu einer Änderung der Position und/oder Lage und/oder Ausrichtung von Bestandteilen der Vorrichtung und/oder der Vorrichtung als Ganzes kommt. Solche Änderungen können die Folge von Witterungseinflüssen (z.B. Niederschlag, Wind, Sonneinstrahlung), von Interaktionen mit Tieren und/oder Menschen und/oder von Erschütterungen der Erde (z.B. Erdbeben, umstürzender Baum, vorbefahrende Fahrzeuge) sein. Es ist möglich, dass sich die Ausrichtung der Kamera und/oder von optischen Elementen der Kamera gegenüber dem Sammelbereich geändert hat und der Sammelbereich nicht mehr oder nicht mehr vollständig abgebildet wird und/oder ganz oder teilweise unscharf abgebildet wird.
- Kamera ist defekt: Es ist möglich, dass die Kamera einen Defekt aufweist und die erzeugten Bildaufnahmen für ein automatisiertes Detektieren, Lokalisieren, Zählen und/oder Identifizieren von Gliederfüßern in dem Sammelbereich nicht geeignet sind. Es ist zum Beispiel möglich, dass die erzeugten Bildaufnahmen verrauscht sind und/oder einen Farbstich aufweisen und/oder einen geringen Kontrastumfang aufweisen und/oder komplett schwarz oder weiß sind oder eine andere Farbe zeigen.

Weitere Funktionsstörungen sind unter der Bezeichnung Funktionsbeeinträchtigungen in den Offenlegungen WO2024165430A1 und WO2024180056A1 beschrieben, deren Inhalt durch diese Bezugnahme vollständig in diese Offenbarung aufgenommen sein soll.

Die Funktionsstörungen und/oder ihre Auswirkungen und/ihre Ursachen werden in Bildaufnahmen, die von der Kamera erzeugt werden, bildhaft festgehalten.

Die Steuereinheit ist konfiguriert, eine oder mehrere Funktionsstörungen in einer Bildaufnahme und/oder anhand einer Bildaufnahme zu identifizieren.

Zum Identifizieren einer Funktionsstörung gibt es zahlreiche Möglichkeiten; nachfolgend werden einige Beispiel beschrieben, ohne die Offenbarung auf diese Beispiele beschränken zu wollen.

Es ist möglich, aus der Bildaufnahme einen oder mehrere Werte eines oder mehrerer Parameter zu extrahieren und/oder abzuleiten und diese mit einem oder mehreren Referenzwerten der Parameter zu vergleichen. Weichen der eine oder die mehreren Werte in definierter Weise von dem einen oder den mehreren Referenzwerten ab, liegt eine Funktionsstörung vor.

Ein solcher Wert kann beispielsweise aus einem Histogramm der Bildaufnahme extrahiert und/oder abgeleitet werden. Ein "Histogramm" ist üblicherweise das Ergebnis einer statistischen Analyse der Häufigkeiten von Farbwerten bzw. Grauwerten in einer Bildaufnahme. Ein Histogramm gibt die Häufigkeitsverteilung der Farbwerte bzw. Grauwerte in einer Bildaufnahme wieder. Ein Histogramm kann z.B. in Form eines Diagramms oder einer grafischen Darstellung vorliegen, in der für jeden Farbwert (bzw. Grauwert) oder für einen Bereich von Farbwerten (bzw. Grauwerten) angegeben ist, wie viele Bildelemente der Bildaufnahme (z.B. absolut oder in Relation zu der Zahl der vorhandenen Bildelemente) diesen Farbwert oder einen Farbwert innerhalb des Bereichs von Farbwerten aufweisen.

Eine Bildaufnahme eines Sammelbereichs ist üblicherweise durch ein charakteristisches Histogramm gekennzeichnet. Ist der Sammelbereich beispielsweise in einer gelben Farbe gestaltet, um Rapsschädlinge anzulocken, wird das Histogramm durch Farbwerte, die die Farbe "gelb" repräsentieren, dominiert. Ist die Kamera verdreckt, kann es sein, dass ein Teil des Sammelbereichs in der Bildaufnahme nicht mehr sichtbar ist; das Histogramm verändert sich dahingehend, dass weniger Bildelemente einen Farbwert aufweisen, der die Farbe "gelb" repräsentiert. Ist der Sammelbereich Teil eines Behälters, der mit einer Flüssigkeit zum Immobilisieren von Gliederfüßern gefüllt ist, führt eine Verschmutzung und/oder ein Algenwachstum in der Flüssigkeit ebenfalls dazu, dass sich das Histogramm verändert. Dies gilt auch für den Fall, dass die Kamera nicht mehr auf den Sammelbereich gerichtet ist, unerwünschte Reflexe auftreten, die Beleuchtung ganz oder teilweise gestört ist, der Sammelbereich ausgeschöpft ist und/oder weitere Funktionsstörungen vorliegen.

Stimmen ein oder mehrere Werte von einem oder mehreren Parametern, die aus der Bildaufnahme extrahiert und/oder abgeleitet werden können, mit einem oder mehreren Referenzwerten des einen oder der mehreren Parameter überein, liegt keine Funktionsstörung vor und die Bildaufnahme kann gespeichert und/oder weiter analysiert und/oder an ein separates Computersystem übermittelt werden.

Liegt eine definierte Abweichung des einen oder der mehreren Werte von dem einen oder den mehreren Referenzwerten vor, liegt eine Funktionsstörung vor.

Es ist ferner möglich, dass der Sammelbereiche eine oder mehrere Kennzeichen aufweist, die in der Bildaufnahme abgebildet sind. Dies können z.B. charakteristische Zeichen, Muster, Farben, Codes (z.B. ein Barcode oder ein 2D-Matrixcode) und/oder eine Kombination davon sein.

Es ist möglich, dass der Sammelbereich herstellungsbedingt ein solches Kennzeichen aufweist. Die in WO2022/243150A1 offenbarte Fangschale weist beispielsweise Vertiefungen auf, die in einer Bildaufnahme zu erkennen sind. Solche Vertiefungen sind charakteristische ein Kennzeichen des Sammelbereichs. Der Sammelbereich kann eine charakteristische Form (z.B. rund oder eckig) aufweisen, die in einer Bildaufnahme abgebildet sein kann. Eine solche charakteristische Form ist ein Kennzeichen des Sammelbereichs.

Kennzeichen können aber auch in den Sammelbereich eingebracht werden. Kennzeichen können in eine Fläche des Sammelbereichs eingraviert, eingeätzt, eingebrannt, eingeprägt und/oder auf sonstige Weise in eine Fläche des Sammelbereichs eingebracht sein. Kennzeichen können auf eine Fläche des Sammelbereichs aufgedruckt und/oder aufgeklebt werden. Kennzeichen können in eine Fläche des Sammelbereichs gestanzt werden. Kennzeichen können im Spritzgussverfahren in eine Fläche des Sammelbereichs eingebracht werden. Kennzeichen können mittels eines Lasers in eine Fläche des Sammelbereichs eingebracht werden.

Die Steuereinheit kann konfiguriert sein zu prüfen, ob das eine oder die mehreren Kennzeichen in einer Bildaufnahme abgebildet ist/sind. Für die Prüfung können Methoden der Mustererkennung verwendet werden. Diese sind im Stand der Technik beschrieben (siehe z.B. S. Singh et al.: Pattern Recognition and Image Analysis, Third International Conference on Advances in Pattern Recognition, ICAPR 2005, Part II, Springer, ISBN-13 978-3-540-28833-6).

Ist das mindestens eine Kennzeichen in der Bildaufnahme abgebildet, kann die Bildaufnahme gespeichert und/oder weiter analysiert und/oder an ein separates Computersystem übermittelt werden. Ist das mindestens eine Kennzeichen in der Bildaufnahme nicht abgebildet, liegt eine Funktionsstörung vor. Ist das mindestens eine Kennzeichen teilweise abgebildet, kann anhand eines oder mehrerer vordefinierter Schwellenwerte entschieden werden, ob eine Funktionsstörung vorliegt oder nicht. Zum Beispiel kann dann eine Funktionsstörung vorliegen, wenn weniger als ein vordefinierter Prozentsatz des mindestens einen Kennzeichens abgebildet ist (z.B. 90% oder 87% oder 66,4% oder ein anderer Prozentsatz).

Eine weitere Möglichkeit, eine Funktionsstörung zu erkennen, besteht darin, die Ergebnisse einer Analyse zur Detektion, Lokalisierung, Identifikation und/oder Quantifizierung der abgebildeten Gliederfüßer zu nutzen. Viele Modelle, die zur Detektion, Lokalisierung, Identifikation und/oder Quantifizierung der abgebildeten Gliederfüßer genutzt werden können, können konfiguriert werden, einen Unsicherheitswert auszugeben, der anzeigt, wie unsicher das Analyseergebnis ist. Ist ein solches Modell beispielsweise ein Klassifikationsmodell, das einen abgebildeten Gliederfüßer einer von mindestens zwei Klassen zuordnet, kann das Klassifikationsmodell konfiguriert sein, zusätzlich zu der Zuordnung eine Wahrscheinlichkeit auszugeben, die angibt, mit welcher Wahrscheinlichkeit der Gliederfüßer der jeweiligen Klasse angehört. Liegt eine Funktionsstörung vor, ist es möglich, dass das Modell "Schwierigkeiten" bei der Zuordnung hat, d.h. die Wahrscheinlichkeit ist geringer, als wenn keine Funktionsstörung vorliegt. Umgekehrt kann also ein Wahrscheinlichkeitswert (oder ein anderer Unsicherheitswert) eine Aussage darüber geben, ob eine Funktionsstörung vorliegt oder nicht. Der beschriebene Wahrscheinlichkeitswert ist eine Art Unsicherheitswert, der negativ mit der Unsicherheit korreliert: je größer die Wahrscheinlichkeit ist, dass der Gliederfüßer einer definierten Klasse angehört, desto geringer ist die Unsicherheit, dass das Analysenergebnis korrekt ist. Ein Modell kann auch konfiguriert sein, einen Unsicherheitswert zu liefern, der positiv mit der Unsicherheit korreliert.

Liegt ein positiv mit der Unsicherheit eines Analysenergebnisses korrelierender Unsicherheitswert oberhalb eines vordefinierten Schwellenwerts, kann angenommen werden, dass eine Funktionsstörung vorliegt.

Eine weitere Möglichkeit, eine Funktionsstörung zu erkennen, besteht darin, die Bildaufnahme einem Modell des maschinellen Lernens zuzuführen, das auf Basis von Trainingsdaten trainiert wurde, eine Funktionsstörung auf Basis der zugeführten Bildaufnahme (und ggf. weiterer Eingabedaten) zu erkennen.

Ein solches "Modell des maschinellen Lernens" kann als eine computerimplementierte Datenverarbeitungsarchitektur verstanden werden. Das Modell kann Eingabedaten empfangen und Ausgabedaten auf der Grundlage dieser Eingabedaten und Modellparametern liefern. Das Modell kann durch Training eine Beziehung zwischen den Eingabedaten und den Ausgabedaten erlernen. Beim Training können Modellparameter angepasst werden, um eine gewünschte Ausgabe für eine bestimmte Eingabe zu liefern.

Beim Trainieren eines solchen Modells werden dem Modell Trainingsdaten präsentiert, aus denen es lernen kann. Das trainierte Modell des maschinellen Lernens ist das Ergebnis des Trainingsprozesses. Die Trainingsdaten umfassen neben Eingabedaten die korrekten Ausgabedaten (Zieldaten), die das Modell auf Basis der Eingabedaten erzeugen soll. Beim Trainieren werden Muster erkannt, die die Eingabedaten auf die Zieldaten abbilden.

Im Trainingsprozess werden die Eingabedaten der Trainingsdaten in das Modell eingegeben, und das Modell erzeugt Ausgabedaten. Die Ausgabedaten werden mit den Zieldaten verglichen. Modellparameter werden so verändert, dass die Abweichungen zwischen den Ausgabedaten und den Zieldaten auf ein (definiertes) Minimum reduziert werden. Zur Modifizierung der Modellparameter im Hinblick auf eine Reduzierung der Abweichungen kann ein Optimierungsverfahren wie beispielsweise ein Gradientenverfahren verwendet werden.

Die Abweichungen können mit Hilfe einer Fehlerfunktion (engl.: *loss function*) quantifiziert werden. Eine solche Fehlerfunktion kann verwendet werden, um einen Fehler (engl.: *loss*) für ein gegebenes Paar von Ausgabedaten und Zieldaten zu berechnen. Das Ziel des Trainingsprozesses kann darin bestehen, die Parameter des Modells des maschinellen Lernens so zu verändern (anzupassen), dass der Fehler für alle Paare des Trainingsdatensatzes auf ein (definiertes) Minimum reduziert wird.

Handelt es sich bei den Ausgabedaten und den Zieldaten beispielsweise um Zahlen, kann die Fehlerfunktion die absolute Differenz zwischen diesen Zahlen sein. In diesem Fall kann ein hoher absoluter Fehler bedeuten, dass ein oder mehrere Modellparameter in hohem Maße geändert werden müssen.

Bei Ausgabedaten in Form von Vektoren können beispielsweise Differenzmetriken zwischen Vektoren wie der mittlere quadratische Fehler, ein Kosinusabstand, eine Norm des Differenzvektors wie ein euklidischer Abstand, ein Tschebyscheff-Abstand, eine Lp-Norm eines Differenzvektors, eine gewichtete Norm oder eine andere Art von Differenzmetrik zweier Vektoren als Fehlerfunktion gewählt werden.

Bei höherdimensionalen Ausgaben, wie z.B. zweidimensionalen, dreidimensionalen oder höherdimensionalen Ausgaben, kann z.B. eine elementweise Differenzmetrik verwendet werden. Alternativ oder zusätzlich können die Ausgabedaten vor der Berechnung eines Fehlerwertes transformiert werden, z.B. in einen eindimensionalen Vektor.

Im vorliegenden Fall erhält das Modell des maschinellen Lernens eine Bildaufnahme und optional weitere Daten als Eingabedaten. Solche weiteren Daten können umfassen: Informationen zu der Bildaufnahme (z.B. Histogramm oder davon abgeleitete Werte, Auflösung), Informationen über Kameraparameter beim Erzeugen der Bildaufnahme (z.B. Brennweite, Blendengröße, Belichtungszeit, ISO-Empfindlichkeit, Sensorgröße, Weißabgleich, Belichtungskorrektur), Informationen zu der Zeit, zu der die Bildaufnahme erzeugt wurde (z.B. Tageszeit und/oder Jahreszeit, Datum, Uhrzeit), Informationen zum Ort, an dem die Bildaufnahme erzeugt wurde (z.B. Positionsinformationen (z.B. Geodaten) zur Position der Vorrichtung), Informationen über den Sammelbereich (z.B. Typ des Sammelbereichs (z.B. Fangschale, Art der Flüssigkeit in der Fangschale, Klebefalle, Farbe des Sammelbereichs) und/oder andere/weitere Informationen).

Das Modell kann trainiert werden, auf Basis der Eingabedaten eine Information auszugeben, ob eine Funktionsstörung vorliegt. Mit anderen Worten, das Modell des maschinellen Lernens kann trainiert werden, Bildaufnahmen von Vorrichtungen mit einer Funktionsstörung von Bildaufnahmen ohne Funktionsstörung zu unterscheiden.

Das Modell des maschinellen Lernens kann trainiert werden, die Eingabedaten einer von mindestens zwei Klassen zuzuordnen, wobei mindestens eine erste Klasse Bildaufnahmen repräsentiert, bei denen keine Funktionsstörung vorliegt, und mindestens eine zweite Klasse Bildaufnahmen repräsentiert, bei denen eine Funktionsstörung vorliegt.

Das Modell des maschinellen Lernens kann trainiert werden, die Eingabedaten einer von mindestens zwei Klassen zuzuordnen, wobei mindestens eine erste Klasse Bildaufnahmen repräsentiert, bei denen eine erste Funktionsstörung vorliegt, und mindestens eine zweite Klasse Bildaufnahmen repräsentiert, bei denen eine zweite Funktionsstörung vorliegt.

Das Trainieren des Modells des maschinellen Lernens erfolgt auf Basis von Trainingsdaten. Die Trainingsdaten umfassen üblicherweise eine Vielzahl von Bildaufnahmen. Der Begriff "Vielzahl" bedeutet mehr als 10, vorzugsweise mehr als 100. Die Bildaufnahmen fungieren als Eingabedaten. Ein Teil der Bildaufnahmen kann erzeugt worden sein, als eine Funktionsstörung vorlag; ein anderer Teil der Bildaufnahmen kann erzeugt worden sein, als keine Funktionsstörung vorlag.

Die Trainingsdaten umfassen üblicherweise neben den Eingabedaten auch Zieldaten. Die Zieldaten können für jede Bildaufnahme angeben, ob zum Zeitpunkt der Erzeugung der Bildaufnahme eine Funktionsstörung vorlag und/oder welche Funktionsstörung vorlag.

Beim Trainieren des Modells des maschinellen Lernens werden die Bildaufnahmen (nacheinander) dem Modell des maschinellen Lernens zugeführt. Das Modell des maschinellen Lernens kann konfiguriert sein, jede Bildaufnahme einer von mindestens zwei Klassen zuzuordnen. Die Klassenzuordnung kann von dem Modell des maschinellen Lernens z.B. in Form einer Zahl ausgegeben werden. So kann beispielsweise die Zahl 0 Bildaufnahmen repräsentieren, bei denen keine Funktionsstörung vorlag; die Zahl 1 kann Bildaufnahmen repräsentieren, bei denen eine Funktionsstörung vorlag. Liegen mehr als zwei Klassen vor, kann beispielsweise die Zahl 0 Bildaufnahmen repräsentieren, bei denen keine Funktionsstörung vorlag; die Zahl 1 kann Bildaufnahmen repräsentieren, bei denen eine erste (spezifische) Funktionsstörung vorlag; die Zahl 2 kann Bildaufnahmen repräsentieren, bei denen eine zweite (spezifische) Funktionsstörung vorlag.

Es ist auch möglich, dass das Modell des maschinellen Lernens konfiguriert ist, für jede Bildaufnahme einen Vektor auszugeben, wobei der Vektor für jede Funktionsstörung an einer Koordinate des Vektors eine Zahl umfasst, die angibt, ob die jeweilige Funktionsstörung in der Bildaufnahme gezeigt ist oder nicht gezeigt ist. Ein solches Vorgehen hat den Vorteil, dass verschiedene Funktionsstörungen, die bei einer Vorrichtung gleichzeitig vorliegen, auch nebeneinander erkannt werden. In einem solchen Vektor kann z.B. die Zahl 0 angeben, dass eine spezifische Funktionsstörung nicht vorliegt und z.B. die Zahl 1 angeben, dass die spezifische Funktionsstörung vorliegt. Die Stelle in dem Vektor (Koordinate), an der die jeweilige Zahl auftritt, kann Auskunft darüber ergeben, um welche spezifische Funktionsstörung es sich jeweils handelt.

Es ist auch möglich, dass das Modell des maschinellen Lernens konfiguriert ist, für eine oder mehrere (spezifische) Funktionsstörungen eine Wahrscheinlichkeit anzugeben, mit der die (spezifische) Funktionsstörung vorliegt. Die Wahrscheinlichkeit kann beispielsweise als ein Wert im Bereich von 0 bis 1 angegeben werden, wobei die Wahrscheinlichkeit umso größer ist, je größer der Wert ist.

Die von dem Modell des maschinellen Lernens auf Basis einer eingegebenen Bildaufnahme ausgegebene Ausgabe (Ausgabedaten) kann mit den Zieldaten verglichen werden. Mit Hilfe einer Fehlerfunktion können Abweichungen zwischen den Ausgabedaten und den Zieldaten quantifiziert werden. In einem Optimierungsverfahren (z.B. einem Gradientenverfahren) können die Abweichungen durch Modifizieren von Modellparametern reduziert werden. Erreichen die Abweichungen ein (vordefiniertes) Minimum oder erreichen sie ein Plateau, kann das Training beendet werden. Das trainierte Modell des maschinellen Lernens kann zur Erkennung einer oder mehrerer Funktionsstörungen verwendet werden.

Hierzu kann eine neue Bildaufnahme von einem Sammelbereich dem trainierten Modell des maschinellen Lernens zugeführt werden. Dabei bedeutet der Begriff "neu", dass die entsprechende Bildaufnahme nicht bereits zum Trainieren des Modells des maschinellen Lernens verwendet wurde. Das trainierte Modell des maschinellen Lernens ordnet die neue Bildaufnahme einer der mindestens zwei Klassen zu, die beim Trainieren des Modells des maschinellen Lernens verwendet wurden. Das trainierte Modell des maschinellen Lernens gibt eine Information aus, welcher Klasse das Modell des maschinellen Lernens die Bildaufnahme zugeordnet hat. Es ist möglich, dass das trainierte Modell des maschinellen Lernens eine Information ausgibt, mit welcher Wahrscheinlichkeit eine oder mehrere Funktionsstörungen vorliegen.

Die Ausgabe des Modells des maschinellen Lernens kann auf einem Bildschirm angezeigt, auf einem Drucker ausgedruckt, in einem Datenspeicher gespeichert und/oder an ein separates Computersystem übermittelt werden (z.B. über ein Netzwerk).

Weitere Möglichkeiten zum Trainieren des Modells des maschinellen Lernens sind in den Offenlegungen WO2024/165430A1 und WO2024180056A1 beschrieben, deren Inhalt durch diese Bezugnahme vollständig in die vorliegende Offenbarung aufgenommen sein soll.

Die Steuereinheit ist konfiguriert, in Reaktion auf das Identifizieren einer Funktionsstörung in einer Bildaufnahme die Vorrichtung in einen Störungszustand zu versetzen.

Mit anderen Worten: für den Fall, dass eine Prüfung einer Bildaufnahme ergeben hat, dass eine Funktionsstörung vorliegt, versetzt die Steuereinheit die Vorrichtung in einen Störungszustand.

Der "Störungszustand" ist dadurch charakterisiert, dass die Vorrichtung eine oder mehrere Funktionen einstellt, das heißt, eine oder mehrere Funktionen nicht mehr ausführt. Das Einstellen der einen oder der mehreren Funktionen dient dem Zweck, Energie und/oder Speicherplatz und/oder Netzwerkverkehr zu reduzieren. Das Einstellen der einen oder der mehreren Funktionen dient dem Zweck, ein unnötiges Erzeugen von Bildaufnahmen, Speichern von Bildaufnahmen, Analysieren von Bildaufnahmen und/oder Übermitteln von Bildaufnahmen über ein Netzwerk zu verhindern.

Der "Störungszustand" kann dadurch charakterisiert sein, dass die Vorrichtung ein weiteres Erzeugen und/oder Analysieren und/oder Speichern und/oder Übermitteln von Bildaufnahmen einstellt.

In einer Ausführungsform der vorliegenden Offenbarung ist die Vorrichtung im Störungszustand konfiguriert, keine Bildaufnahmen mehr zu erzeugen.

In einer Ausführungsform der vorliegenden Offenbarung ist die Vorrichtung im Störungszustand konfiguriert, keine Bildaufnahmen mehr in einem Datenspeicher zu speichern und/oder an ein separates Computersystem zu übermitteln.

Dadurch wird verhindert, dass unnötig Energie für das Erzeugen und/oder Speichern und/oder Übermitteln von Bildaufnahmen verbraucht wird.

Dadurch wird verhindert, dass unnötig Speicher für das Speichern von Bildaufnahmen belegt wird.

Dadurch wird verhindert, dass unnötig Netzwerkverkehr für das Übermitteln von Bildaufnahmen erzeugt wird.

Es können dadurch Ressourcen und Kosten gespart werden.

Es ist möglich, dass der Störungszustand der Aus-Zustand ist.

Es ist möglich, dass der Störungszustand der Energiesparzustand ist.

Es ist möglich, dass eine Vorrichtung, die im Störungszustand ist, zwischen dem Störungszustand in den Energiesparzustand und wieder zurück in den Störungszustand wechseln kann.

Es ist möglich, dass die Vorrichtung nach dem Versetzen der Vorrichtung in den Störungszustand zwischen dem Energiesparzustand und dem Störungszustand hin- und herwechselt, jedoch nicht mehr so häufig wie sie zwischen dem Energiesparzustand und dem Aktivzustand gewechselt ist. Mit anderen Worten: wurde die Vorrichtung in den Störungszustand versetzt, ist es möglich, dass sie mehr Zeit in dem Energiezustand verbringt.

Es ist möglich, dass die Vorrichtung im Störungszustand Informationen über eine Netzwerkverbindung an das separate Computersystem versendet (z.B. Informationen zum Status der Vorrichtung), jedoch keine Bildaufnahmen mehr erzeugt, keine Bildaufnahmen mehr analysiert, keine Bildaufnahmen mehr speichert und/oder keine Bildaufnahmen mehr an das separate Computersystem übermittelt.

Es ist möglich, dass die Steuereinheit im Störungszustand konfiguriert ist, die Sendeeinheit zu veranlassen, eine Mitteilung an ein separates Computersystem zu übermitteln, bevor die Steuereinheit die Vorrichtung in den Energiesparzustand oder den Aus-Zustand versetzt. Die Mitteilung kann einen Nutzer darüber in Kenntnis setzen, dass die Vorrichtung in den Energiesparzustand oder den Aus-Zustand versetzt wird. Die Mitteilung kann einen Nutzer darüber in Kenntnis setzen, dass eine Funktionsstörung vorliegt und/oder welche Funktionsstörung vorliegt. Die Mitteilung kann diejenige Bildaufnahme umfassen, auf deren Basis die Funktionsstörung festgestellt wurde.

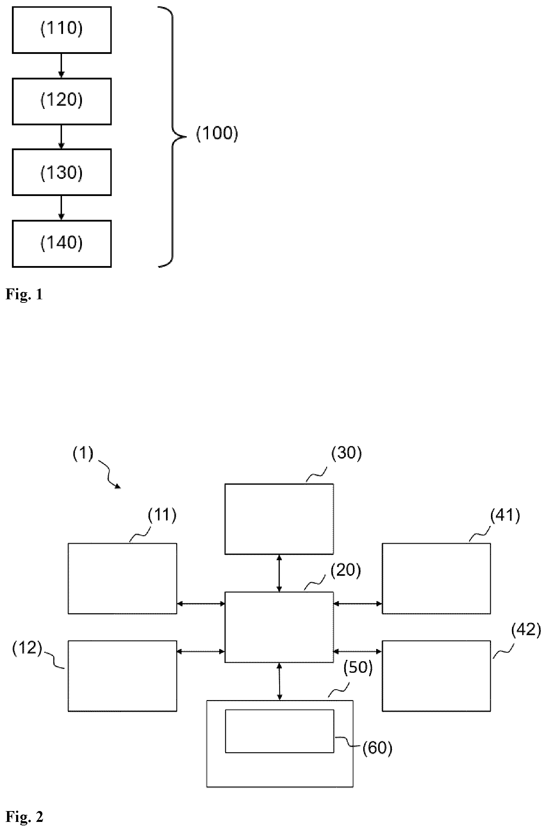

Fig. 1 zeigt beispielhaft und schematisch eine Ausführungsform des computer-implementierten Verfahrens der vorliegenden Offenbarung in Form eines Ablaufschemas.

Das Verfahren (100) umfasst die Schritte:

| | |
|---|---|
| (110) | Veranlassen einer Kamera, zu definierten Zeitpunkten und/oder in definierten Zeitabständen und/oder bei Eintreten definierter Ereignisse eine Bildaufnahme von einem Sammelbereich für Gliederfüßer zu erzeugen, wobei die Kamera und der Sammelbereich Bestandteile einer Vorrichtung zum Überwachen von Gliederfüßern sind, |
| (120) | Empfangen einer Bildaufnahme von der Kamera, |
| (130) | Identifizieren einer Funktionsstörung bei der Vorrichtung auf Basis der Bildaufnahme, |
| (140) | in Reaktion auf das Identifizieren der Funktionsstörung: Versetzen der Vorrichtung in einen Störungszustand. |

Fig. 2 zeigt beispielhaft und schematisch eine Ausführungsform der Vorrichtung der vorliegenden Offenbarung.

Die Vorrichtung (1) umfasst eine Verarbeitungseinheit (20) (engl. *processing unit*) und einen Speicher (50).

Die Verarbeitungseinheit (20) kann einen oder mehrere Prozessoren allein oder in Kombination mit einem oder mehreren Speichern umfassen. Bei der Verarbeitungseinheit (20) kann es sich um gewöhnliche Computerhardware handeln, die in der Lage ist, Informationen wie z.B. digitale Bildaufnahmen, Computerprogramme und/oder andere digitale Informationen zu verarbeiten. Die Verarbeitungseinheit (20) besteht üblicherweise aus einer Anordnung elektronischer Schaltungen, von denen einige als integrierter Schaltkreis oder als mehrere miteinander verbundene integrierte Schaltkreise (ein integrierter Schaltkreis wird manchmal auch als "Chip" bezeichnet) ausgeführt sein können. Die Verarbeitungseinheit (20) kann konfiguriert sein, Computerprogramme auszuführen, die im Speicher (50) gespeichert sein können.

Der Speicher (50) kann eine gewöhnliche Computerhardware sein, die in der Lage ist, Informationen wie z.B. digitale Bildaufnahmen (z.B. Repräsentationen des Untersuchungsbereichs), Daten, Computerprogramme und/oder andere digitale Informationen entweder vorübergehend und/oder dauerhaft zu speichern. Der Speicher (50) kann einen flüchtigen und/oder nichtflüchtigen Speicher umfassen und kann fest eingebaut oder entfernbar sein. Beispiele für geeignete Speicher sind RAM (Random Access Memory), ROM (Read-Only Memory), eine Festplatte, ein Flash-Speicher oder eine Kombination der oben genannten.

Zusätzlich zum Speicher (50) kann die Verarbeitungseinheit (20) auch mit einer oder mehreren Schnittstellen (11, 12, 30, 41, 42) verbunden sein, um Informationen anzuzeigen, zu übertragen und/oder zu empfangen. Die Schnittstellen können eine oder mehrere Kommunikationsschnittstellen (41, 42) und/oder eine oder mehrere Benutzerschnittstellen (11, 12, 30) umfassen. Die eine oder mehrere Kommunikationsschnittstellen (41, 42) können so konfiguriert sein, dass sie Informationen senden und/oder empfangen, z.B. zu und/oder von einer Kamera, anderen Computersystemen, Netzwerken, Datenspeichern oder dergleichen. Die eine oder mehrere Kommunikationsschnittstellen (41, 42) können so konfiguriert sein, dass sie Informationen über physische (verdrahtete) und/oder drahtlose Kommunikationsverbindungen übertragen und/oder empfangen. Die eine oder die mehreren Kommunikationsschnittstellen (41, 42) können eine oder mehrere Schnittstellen für die Verbindung mit einem Netzwerk enthalten, z.B. unter Verwendung von Technologien wie Mobiltelefon, Wi-Fi, Satellit, Kabel, DSL, Glasfaser und/oder dergleichen. In einigen Beispielen können die eine oder die mehreren Kommunikationsschnittstellen (41, 42) eine oder mehrere Nahbereichskommunikationsschnittstellen umfassen, die so konfiguriert sind, dass sie Geräte mit Nahbereichskommunikationstechnologien wie NFC, RFID, Bluetooth, Bluetooth LE, ZigBee, Infrarot (z. B. IrDA) oder Ähnlichem verbinden.

Die Benutzerschnittstellen (11, 12, 30) können eine Anzeige (30) umfassen. Eine Anzeige (30) kann so konfiguriert sein, dass sie einem Benutzer Informationen anzeigt. Geeignete Beispiele hierfür sind eine Flüssigkristallanzeige (LCD), eine Leuchtdiodenanzeige (LED), ein Plasmabildschirm (PDP) oder Ähnliches. Die Benutzereingabeschnittstelle(n) (11, 12) kann/können verdrahtet oder drahtlos sein und kann/können so konfiguriert sein, dass sie Informationen von einem Benutzer in das Computersystem (1) empfängt/empfangen, z.B. zur Verarbeitung, Speicherung und/oder Anzeige. Geeignete Beispiele für Benutzereingabeschnittstellen (11, 12) sind ein Mikrofon, ein Bild- oder Videoaufnahmegerät (z.B. eine Kamera), eine Tastatur oder ein Tastenfeld, ein Joystick, eine berührungsempfindliche Oberfläche (getrennt von einem Touchscreen oder darin integriert) oder ähnliches. In einigen Beispielen können die Benutzerschnittstellen eine automatische Identifikations- und Datenerfassungstechnologie (AIDC) für maschinenlesbare Informationen enthalten. Dazu können Barcodes, Radiofrequenz-Identifikation (RFID), Magnetstreifen, optische Zeichenerkennung (OCR), Karten mit integrierten Schaltkreisen (ICC) und ähnliches gehören. Die Benutzerschnittstellen können ferner eine oder mehrere Schnittstellen für die Kommunikation mit Peripheriegeräten wie Druckern und/oder Kameras und dergleichen umfassen.

Ein oder mehrere Computerprogramme (60) können im Speicher (50) gespeichert sein und von der Verarbeitungseinheit (20) ausgeführt werden, die dadurch programmiert wird, die in dieser Beschreibung beschriebenen Funktionen zu erfüllen. Das Abrufen, Laden und Ausführen von Anweisungen des Computerprogramms (60) kann sequenziell erfolgen, so dass jeweils ein Befehl abgerufen, geladen und ausgeführt wird. Das Abrufen, Laden und/oder Ausführen kann aber auch parallel erfolgen.

Die Vorrichtung kann ein Computersystem in Form eines Laptops, Notebooks, Netbooks und/der Tablet-PCs oder Smartphones sein oder ein solches umfassen; die Vorrichtung kann auch ein Bestandteil einer Kamera sein. Ebenso können eine oder mehrere Kameras Bestandteil der Vorrichtung sein.

In einer Ausführungsform der vorliegenden Offenbarung umfasst die Vorrichtung eine Fangvorrichtung für Gliederfüßer oder spezifische Gliederfüßer. In einer Ausführungsform der vorliegenden Offenbarung umfasst die Fangvorrichtung den Sammelbereich. In einer Ausführungsform der vorliegenden Offenbarung umfasst die Kamera mindestens einen Kamerasensor auf den der Sammelbereich (z.B. durch eine Kameraoptik, die ein Bestandteil der Vorrichtung sein kann) abgebildet wird.

Gegenstand der vorliegenden Erfindung ist auch ein Computerprogramm. Ein solches Computerprogramm kann auf einem nichtflüchtigen Datenträger wie beispielsweise einer CD, einer DVD, einem USB-Stick oder einem anderen Medium zum Speichern von Daten gespeichert sein.

Das Computerprogramm kann in einem App-Store und/oder auf einer Webseite des Internets zum Herunterladen angeboten werden.

Das Computerprogramm kann in den Speicher der Vorrichtung der vorliegenden Offenbarung geladen werden und/oder dort bereits gespeichert sein und die Vorrichtung dazu veranlassen, folgende Schritte ausführen:
- Veranlassen einer Kamera, zu definierten Zeitpunkten und/oder in definierten Zeitabständen und/oder bei Eintreten definierter Ereignisse eine Bildaufnahme von einem Sammelbereich für Gliederfüßer zu erzeugen,
- Empfangen einer Bildaufnahme von der Kamera,
- Identifizieren einer Funktionsstörung bei der Vorrichtung auf Basis der Bildaufnahme,
- in Reaktion auf das Identifizieren der Funktionsstörung: Versetzen der Vorrichtung in einen Störungszustand.

## Patentansprüche

1. Vorrichtung (1) zum Überwachen von Gliederfüßern umfassend
- eine Kamera und
- eine Steuereinheit,
wobei die Steuereinheit konfiguriert ist,
- die Kamera zu definierten Zeitpunkten und/oder in definierten Zeitabständen und/oder bei Eintreten definierter Ereignisse zu veranlassen, eine Bildaufnahme von einem Sammelbereich zu erzeugen,
- die von der Kamera erzeugte Bildaufnahme zu analysieren,
- auf Basis der Bildaufnahme eine Funktionsstörung bei der Vorrichtung (1) zu identifizieren,
- in Reaktion auf das Identifizieren der Funktionsstörung: die Vorrichtung (1) in einen Störungszustand zu versetzen,
**dadurch gekennzeichnet, dass**
- das Analysieren der Bildaufnahme ein Detektieren, Lokalisieren, Identifizieren und/oder Zählen von Gliederfüßern in der Bildaufnahme umfasst,
- die Funktionsstörung dazu führt, dass Gliederfüßer in der Bildaufnahme nicht mehr korrekt erkannt, lokalisiert, identifiziert und/oder gezählt werden können,
- der Störungszustand **dadurch gekennzeichnet ist, dass** von der Kamera erzeugte Bildaufnahmen nicht mehr analysiert werden.

2. Vorrichtung (1) gemäß Anspruch 1, wobei der Störungszustand **dadurch gekennzeichnet ist, dass** die Kamera keine Bildaufnahmen von dem Sammelbereich mehr erzeugt.

3. Vorrichtung (1) gemäß einem der Ansprüche 1 bis 2, ferner umfassend eine Sendeeinheit,
wobei die Steuereinheit konfiguriert ist, die Sendeeinheit zu definierten Zeitpunkten und/oder in definierten Zeitabständen und/oder bei Eintreten definierter Ereignisse zu veranlassen, eine oder mehrere von der Kamera erzeugte Bildaufnahmen über eine Netzwerkverbindung an ein separates Computersystem zu übermitteln,
wobei der Störungszustand **dadurch gekennzeichnet ist, dass** die Sendeeinheit keine Bildaufnahmen mehr an das separate Computersystem übermittelt.

4. Vorrichtung (1) gemäß einem der Ansprüche 1 bis 3,
wobei die Funktionsstörung und/oder ihre Auswirkung und/oder ihre Ursache in der Bildaufnahme bildhaft festgehalten ist.

5. Vorrichtung (1) gemäß einem der Ansprüche 1 bis 4,
wobei das Identifizieren der Funktionsstörung umfasst:
- Extrahieren und/oder Ableiten eines oder mehrerer Werte eines oder mehrerer Parameter aus der Bildaufnahme,
- Feststellen einer definierten Abweichung des einen oder der mehreren Werte von einem oder mehreren Referenzwerten des einen oder der mehreren Parameter, wobei die definierte Abweichung die Funktionsstörung anzeigt.

6. Vorrichtung (1) gemäß einem der Ansprüche 1 bis 5,
wobei das Identifizieren der Funktionsstörung umfasst:
- Erzeugen eines Histogramms von der Bildaufnahme,
- Feststellen einer definierten Abweichung des Histogramms oder eines Teils davon oder eines oder mehrerer Werte, die auf Basis des Histogramm ermittelt werden, von einem Referenzhistogramm oder einem oder mehreren Referenzwerten, wobei die definierte Abweichung die Funktionsstörung anzeigt.

7. Vorrichtung (1) gemäß einem der Ansprüche 1 bis 6,
wobei das Identifizieren der Funktionsstörung umfasst:
- Prüfen, ob ein oder mehrere Kennzeichen des Sammelbereichs in der Bildaufnahme abgebildet sind,
- Feststellen, dass das eine oder die mehreren Kennzeichen nicht oder nicht gemäß vorgegebener Kriterien in der Bildaufnahme abgebildet sind.

8. Vorrichtung (1) gemäß Anspruch 7,
wobei das eine oder die mehreren Kennzeichen eine Form des Sammelbereichs und/oder eine Struktur innerhalb des Sammelbereichs und/oder ein in den Sammelbereich durch Eingravieren, Einätzen, Einbrennen, Einprägen, Aufdrucken, Aufkleben und/oder Lasern eingebrachtes Kennzeichen umfasst.

9. Vorrichtung (1) gemäß einem der Ansprüche 1 bis 8,
wobei das Identifizieren der Funktionsstörung umfasst:
- Analysieren der Bildaufnahme und Ermitteln eines Analyseergebnisses, wobei das Analysieren der Bildaufnahme ein Detektieren, Lokalisieren, Identifizieren und/oder Zählen von Gliederfüßern in der Bildaufnahme umfasst,
- Ermitteln eines Unsicherheitswerts, wobei der Unsicherheitswert anzeigt, mit welcher Unsicherheit das Analysenergebnis behaftet ist,
- Feststellen, dass der Unsicherheitswert oberhalb eines Schwellenwerts liegt.

10. Vorrichtung (1) gemäß einem der Ansprüche 1 bis 9,
wobei das Identifizieren der Funktionsstörung umfasst:
- Zuführen der Bildaufnahme einem trainierten Modell des maschinellen Lernens, wobei das Modell des maschinellen Lernens konfiguriert ist und trainiert wurde, Funktionsstörungen in Bildaufnahmen zu erkennen,
- Empfangen einer Ausgabe von dem trainierten Modell des maschinellen Lernens, wobei die Ausgabe eine Funktionsstörung anzeigt.

11. Vorrichtung (1) gemäß einem der Ansprüche 1 bis 10,
wobei das Identifizieren der Funktionsstörung umfasst:
- Zuführen der Bildaufnahme einem trainierten Modell des maschinellen Lernens, wobei das Modell des maschinellen Lernens konfiguriert ist und auf Basis von Trainingsdaten trainiert wurde, wobei die Trainingsdaten (i) Bildaufnahmen mit und ohne Funktionsstörung als Eingabedaten und (ii) eine Information als Zieldaten umfassen, wobei die Information angibt, ob und/oder welche Funktionsstörung in den Bildaufnahmen vorliegt, wobei das Trainieren des Modells des maschinellen Lernens umfasst:
∘ Eingeben der Eingabedaten in das Modell des maschinellen Lernens,
∘ Empfangen von Ausgabedaten von dem Modell des maschinellen Lernens,
∘ Reduzieren einer Abweichung zwischen den Ausgabedaten und den Zieldaten durch Modifizieren von Modellparametern des Modells des maschinellen Lernens,
- Empfangen einer Ausgabe von dem trainierten Modell des maschinellen Lernens, wobei die Ausgabe eine Funktionsstörung anzeigt.

12. Vorrichtung (1) gemäß einem der Ansprüche 1 bis 11,
wobei das Identifizieren der Funktionsstörung umfasst:
- Zuführen der Bildaufnahme einem trainierten Modell des maschinellen Lernens, wobei das Modell des maschinellen Lernens konfiguriert ist und auf Basis von Trainingsdaten trainiert wurde, eine Bildaufnahme einer von mindestens zwei Klassen zuzuordnen, wobei mindestens eine Klasse Bildaufnahmen repräsentiert, die eine Funktionsstörung zeigen,
- Empfangen einer Ausgabe von dem trainierten Modell des maschinellen Lernens, wobei die Ausgabe anzeigt, dass die Bildaufnahme einer Klasse zugeordnet wurde, die Bildaufnahmen repräsentiert, die eine Funktionsstörung zeigen.

13. Vorrichtung (1) gemäß einem der Ansprüche 1 bis 12,
wobei die Funktionsstörung eine oder mehrere der folgenden Funktionsstörungen ist und/oder auf eine oder mehrere der folgenden Ursachen zurückzuführen ist:
- Verunreinigungen im Sammelbereich,
- eine Vielzahl an Gliederfüßern im Sammelbereich,
- Algenbildung im Sammelbereich,
- Schaumbildung im Sammelbereich,
- Einschränkungen im Sichtfeld der Kamera durch Tiere und/oder Pflanzen,
- Verschmutzung der Kamera und/oder von optischen Elementen der Kamera,
- verschmutzte und/oder defekte Beleuchtungsquelle
- unerwünschte Reflexe auf einem Bildsensor der Kamera,
- Positions-/ und/oder Lageänderung von Bestandteilen der Vorrichtung (1) und/oder der Vorrichtung (1) als Ganzes,
- defekte Kamera.

14. Vorrichtung (1) gemäß einem der Ansprüche 1 bis 13,
wobei die Steuereinheit konfiguriert ist, die Vorrichtung (1) zu definierten Zeitpunkten und/oder in definierten Zeitabständen und/oder bei Eintreten definierter Ereignisse aus einem Ruhezustand in einen Aktivzustand zu versetzen und
- die Kamera zu veranlassen, die Bildaufnahme des Sammelbereichs zu erzeugen,
- auf Basis der Bildaufnahme die Funktionsstörung bei der Vorrichtung (1) zu identifizieren,
- für den Fall, dass keine Funktionsstörung vorliegt:
∘ die Bildaufnahme über eine Netzwerkverbindung an ein separates Computersystem zu übermitteln,
∘ die Vorrichtung (1) anschließend aus dem Aktivzustand wieder in den Ruhezustand zu versetzen,
- für den Fall, dass eine Funktionsstörung vorliegt:
∘ die Vorrichtung (1) in den Störungszustand zu versetzen.

15. Vorrichtung (1) gemäß einem der Ansprüche 1 bis 14, ferner umfassend eine Energieversorgungseinheit, wobei die Energieversorgungseinheit einen Akkumulator, eine Solarzelle, einen Generator und/oder eine Brennstoffzelle umfasst.

16. Vorrichtung (1) gemäß einem der Ansprüche 1 bis 15, wobei der Sammelbereich ein Teil einer Fangvorrichtung für Gliederfüßer ist.

17. Computer-implementiertes Verfahren umfassend die Schritte:
- Veranlassen einer Kamera, zu definierten Zeitpunkten und/oder in definierten Zeitabständen und/oder, bei Eintreten definierter Ereignisse eine Bildaufnahme von einem Sammelbereich für Gliederfüßer zu erzeugen, wobei die Kamera und der Sammelbereich Bestandteile einer Vorrichtung (1) zum Überwachen von Gliederfüßern sind,
- Empfangen einer Bildaufnahme von der Kamera,
- Analysieren der Bildaufnahme, wobei das Analysieren der Bildaufnahme ein Detektieren, Lokalisieren, Identifizieren und/oder Zählen von Gliederfüßern in der Bildaufnahme umfasst,
- Identifizieren einer Funktionsstörung bei der Vorrichtung (1) auf Basis der Bildaufnahme, wobei die Funktionsstörung dazu führt, dass Gliederfüßer in der Bildaufnahme nicht mehr korrekt erkannt, lokalisiert, identifiziert und/oder gezählt werden können,
- in Reaktion auf das Identifizieren der Funktionsstörung: Veranlassen des Versetzens der Vorrichtung (1) in einen Störungszustand, wobei der Störungszustand **dadurch gekennzeichnet ist, dass** von der Kamera erzeugte Bildaufnahmen nicht mehr analysiert werden.

18. Nicht-flüchtiges computerlesbares Speichermedium, auf dem ein Computerprogramm gespeichert ist, das, wenn es von einer Vorrichtung (1) zum Überwachen von Gliederfüßer nach Anspruch 1 ausgeführt wird, die Steuereinheit der Vorrichtung (1) veranlasst folgende Schritte auszuführen:
- Veranlassen der Kamera, zu definierten Zeitpunkten und/oder in definierten Zeitabständen und/oder bei Eintreten definierter Ereignisse eine Bildaufnahme von einem Sammelbereich für Gliederfüßer zu erzeugen,
- Empfangen der Bildaufnahme von der Kamera,
- Analysieren der Bildaufnahme, wobei das Analysieren der Bildaufnahme ein Detektieren, Lokalisieren, Identifizieren und/oder Zählen von Gliederfüßern in der Bildaufnahme umfasst,
- Identifizieren einer Funktionsstörung bei der Vorrichtung (1) auf Basis der Bildaufnahme, wobei die Funktionsstörung dazu führt, dass Gliederfüßer in der Bildaufnahme nicht mehr korrekt erkannt, lokalisiert, identifiziert und/oder gezählt werden können,
- in Reaktion auf das Identifizieren der Funktionsstörung: Versetzen der Vorrichtung (1) in einen Störungszustand,
wobei der Störungszustand **dadurch gekennzeichnet ist, dass** von der Kamera erzeugte Bildaufnahmen nicht mehr analysiert werden.

## Claims

1. Device (1) for monitoring arthropods comprising
• a camera and
• a control unit, wherein the control unit is configured to
• cause the camera at defined points in time and/or at defined time intervals and/or upon occurrence of defined events to generate an image of a collection area,
• analyse the image generated by the camera,
• identify a malfunction of the device (1) on the basis of the image,
• in response to identifying the malfunction: place the device (1) in a fault state, **characterised in that**
• analysing the image comprises detecting, localising, identifying and/or counting arthropods in the image,
• the malfunction leads to arthropods in the image no longer being correctly detected, localised, identified and/or counted,
• the fault state is **characterised in that** images generated by the camera are no longer analysed.

2. Device (1) according to claim 1, wherein the fault state is **characterised in that** the camera no longer generates images of the collection area.

3. Device (1) according to any one of claims 1 to 2, further comprising a transmitting unit, wherein the control unit is configured to cause the transmitting unit at defined points in time and/or at defined time intervals and/or upon occurrence of defined events to transmit one or more images generated by the camera via a network connection to a separate computer system, wherein the fault state is **characterised in that** the transmitting unit no longer transmits images to the separate computer system.

4. Device (1) according to any one of claims 1 to 3, wherein the malfunction and/or its effect and/or its cause is captured in image form in the image.

5. Device (1) according to any one of claims 1 to 4, wherein identifying the malfunction comprises:
• extracting and/or deriving one or more values of one or more parameters from the image,
• determining a defined deviation of the one or more values from one or more reference values of the one or more parameters, wherein the defined deviation indicates the malfunction.

6. Device (1) according to any one of claims 1 to 5, wherein identifying the malfunction comprises:
• generating a histogram of the image,
• determining a defined deviation of the histogram or a part thereof or of one or more values determined on the basis of the histogram from a reference histogram or one or more reference values, wherein the defined deviation indicates the malfunction.

7. Device (1) according to any one of claims 1 to 6, wherein identifying the malfunction comprises:
• checking whether one or more identifiers of the collection area are depicted in the image,
• determining that the one or more identifiers are not depicted or are not depicted in accordance with predetermined criteria in the image.

8. Device (1) according to claim 7, wherein the one or more identifiers comprise a shape of the collection area and/or a structure within the collection area and/or an identifier introduced into the collection area by engraving, etching, burning, embossing, printing, adhering and/or lasering.

9. Device (1) according to any one of claims 1 to 8, wherein identifying the malfunction comprises:
• analysing the image and determining an analysis result, wherein analysing the image comprises detecting, localising, identifying and/or counting arthropods in the image,
• determining an uncertainty value, wherein the uncertainty value indicates with what uncertainty the analysis result is affected,
• determining that the uncertainty value is above a threshold value.

10. Device (1) according to any one of claims 1 to 9, wherein identifying the malfunction comprises:
• feeding the image to a trained machine learning model, wherein the machine learning model is configured and has been trained to detect malfunctions in images,
• receiving an output from the trained machine learning model, wherein the output indicates a malfunction.

11. Device (1) according to any one of claims 1 to 10, wherein identifying the malfunction comprises:
• feeding the image to a trained machine learning model, wherein the machine learning model is configured and has been trained on the basis of training data, wherein the training data comprise (i) images with and without malfunction as input data and (ii) information as target data, wherein the information indicates whether and/or which malfunction is present in the images, wherein the training of the machine learning model comprises:
• inputting the input data into the machine learning model,
• receiving output data from the machine learning model,
• reducing a deviation between the output data and the target data by modifying model parameters of the machine learning model,
• receiving an output from the trained machine learning model, wherein the output indicates a malfunction.

12. Device (1) according to any one of claims 1 to 11, wherein identifying the malfunction comprises:
• feeding the image to a trained machine learning model, wherein the machine learning model is configured and has been trained on the basis of training data to assign an image to one of at least two classes, wherein at least one class represents images showing a malfunction,
• receiving an output from the trained machine learning model, wherein the output indicates that the image has been assigned to a class representing images showing a malfunction.

13. Device (1) according to any one of claims 1 to 12, wherein the malfunction is one or more of the following malfunctions and/or is attributable to one or more of the following causes:
• contaminations in the collection area,
• a multitude of arthropods in the collection area,
• algae formation in the collection area,
• foam formation in the collection area,
• restrictions in the field of view of the camera by animals and/or plants,
• contamination of the camera and/or of optical elements of the camera,
• contaminated and/or defective illumination source,
• unwanted reflections on an image sensor of the camera,
• change in position and/or orientation of components of the device (1) and/or of the device (1) as a whole,
• defective camera.

14. Device (1) according to any one of claims 1 to 13, wherein the control unit is configured to place the device (1) at defined points in time and/or at defined time intervals and/or upon occurrence of defined events from a sleep state into an active state and to
• cause the camera to generate the image of the collection area,
• identify the malfunction of the device (1) on the basis of the image,
• in the event that no malfunction is present:
• transmit the image via a network connection to a separate computer system,
• subsequently place the device (1) from the active state back into the sleep state,
• in the event that a malfunction is present:
• place the device (1) in the fault state.

15. Device (1) according to any one of claims 1 to 14, further comprising a power supply unit, wherein the power supply unit comprises an accumulator, a solar cell, a generator and/or a fuel cell.

16. Device (1) according to any one of claims 1 to 15, wherein the collection area is part of a trapping device for arthropods.

17. Computer-implemented method comprising the steps of:
• causing a camera at defined points in time and/or at defined time intervals and/or upon occurrence of defined events to generate an image of a collection area for arthropods, wherein the camera and the collection area are components of a device for monitoring arthropods,
• receiving an image from the camera,
• analysing the image, wherein analysing the image comprises detecting, localising, identifying and/or counting arthropods in the image,
• identifying a malfunction of the device (1) on the basis of the image, wherein the malfunction leads to arthropods in the image no longer being correctly detected, localised, identified and/or counted,
• in response to identifying the malfunction: causing the placing of the device (1) in a fault state, wherein the fault state is **characterised in that** images generated by the camera are no longer analysed.

18. Non-transitory computer-readable storage medium on which a computer program is stored which, when executed by a device (1) for monitoring arthropods according to claim 1, causes the control unit of the device (1) to carry out the following steps:
• causing the camera at defined points in time and/or at defined time intervals and/or upon occurrence of defined events to generate an image of a collection area for arthropods,
• receiving the image from the camera,
• analysing the image, wherein analysing the image comprises detecting, localising, identifying and/or counting arthropods in the image,
• identifying a malfunction of the device (1) on the basis of the image, wherein the malfunction leads to arthropods in the image no longer being correctly detected, localised, identified and/or counted,
• in response to identifying the malfunction: placing the device (1) in a fault state, wherein the fault state is **characterised in that** images generated by the camera are no longer analysed.

## Revendications

1. Dispositif (1) de surveillance d'arthropodes comprenant
• une caméra et
• une unité de commande, l'unité de commande étant configurée pour
• amener la caméra à des moments définis et/ou à des intervalles de temps définis et/ou lors de la survenance d'événements définis à générer une image d'une zone de collecte,
• analyser l'image générée par la caméra,
• identifier un dysfonctionnement du dispositif (1) sur la base de l'image,
• en réponse à l'identification du dysfonctionnement : placer le dispositif (1) dans un état de dysfonctionnement, **caractérisé en ce que**
• l'analyse de l'image comprend la détection, la localisation, l'identification et/ou le comptage d'arthropodes dans l'image,
• le dysfonctionnement conduit à ce que les arthropodes dans l'image ne puissent plus être correctement détectés, localisés, identifiés et/ou comptés,
• l'état de dysfonctionnement est **caractérisé en ce que** les images générées par la caméra ne sont plus analysées.

2. Dispositif (1) selon la revendication 1, l'état de dysfonctionnement étant **caractérisé en ce que** la caméra ne génère plus d'images de la zone de collecte.

3. Dispositif (1) selon l'une quelconque des revendications 1 à 2, comprenant en outre une unité de transmission, l'unité de commande étant configurée pour amener l'unité de transmission à des moments définis et/ou à des intervalles de temps définis et/ou lors de la survenance d'événements définis à transmettre une ou plusieurs images générées par la caméra via une connexion réseau à un système informatique séparé, l'état de dysfonctionnement étant **caractérisé en ce que** l'unité de transmission ne transmet plus d'images au système informatique séparé.

4. Dispositif (1) selon l'une quelconque des revendications 1 à 3, le dysfonctionnement et/ou son effet et/ou sa cause étant capturé(s) sous forme d'image dans l'image.

5. Dispositif (1) selon l'une quelconque des revendications 1 à 4, l'identification du dysfonctionnement comprenant :
• l'extraction et/ou la dérivation d'une ou de plusieurs valeurs d'un ou de plusieurs paramètres à partir de l'image,
• la constatation d'un écart défini de la ou des valeurs par rapport à une ou plusieurs valeurs de référence du ou des paramètres, l'écart défini indiquant le dysfonctionnement.

6. Dispositif (1) selon l'une quelconque des revendications 1 à 5, l'identification du dysfonctionnement comprenant :
• la génération d'un histogramme de l'image,
• la constatation d'un écart défini de l'histogramme ou d'une partie de celui-ci ou d'une ou de plusieurs valeurs déterminées sur la base de l'histogramme par rapport à un histogramme de référence ou à une ou plusieurs valeurs de référence, l'écart défini indiquant le dysfonctionnement.

7. Dispositif (1) selon l'une quelconque des revendications 1 à 6, l'identification du dysfonctionnement comprenant :
• la vérification de la présence d'un ou de plusieurs marquages de la zone de collecte dans l'image,
• la constatation que le ou les marquages ne sont pas représentés ou ne sont pas représentés conformément à des critères prédéfinis dans l'image.

8. Dispositif (1) selon la revendication 7, le ou les marquages comprenant une forme de la zone de collecte et/ou une structure à l'intérieur de la zone de collecte et/ou un marquage introduit dans la zone de collecte par gravure, attaque chimique, marquage au feu, estampage, impression, collage et/ou laser.

9. Dispositif (1) selon l'une quelconque des revendications 1 à 8, l'identification du dysfonctionnement comprenant :
• l'analyse de l'image et la détermination d'un résultat d'analyse, l'analyse de l'image comprenant la détection, la localisation, l'identification et/ou le comptage d'arthropodes dans l'image,
• la détermination d'une valeur d'incertitude, la valeur d'incertitude indiquant avec quelle incertitude le résultat d'analyse est affecté,
• la constatation que la valeur d'incertitude se situe au-dessus d'une valeur seuil.

10. Dispositif (1) selon l'une quelconque des revendications 1 à 9, l'identification du dysfonctionnement comprenant :
• l'alimentation de l'image à un modèle entraîné d'apprentissage automatique, le modèle d'apprentissage automatique étant configuré et ayant été entraîné pour détecter des dysfonctionnements dans des images,
• la réception d'une sortie du modèle entraîné d'apprentissage automatique, la sortie indiquant un dysfonctionnement.

11. Dispositif (1) selon l'une quelconque des revendications 1 à 10, l'identification du dysfonctionnement comprenant :
• l'alimentation de l'image à un modèle entraîné d'apprentissage automatique, le modèle d'apprentissage automatique étant configuré et ayant été entraîné sur la base de données d'entraînement, les données d'entraînement comprenant (i) des images avec et sans dysfonctionnement en tant que données d'entrée et (ii) une information en tant que données cibles, l'information indiquant si et/ou quel dysfonctionnement est présent dans les images, l'entraînement du modèle d'apprentissage automatique comprenant :
• l'introduction des données d'entrée dans le modèle d'apprentissage automatique,
• la réception de données de sortie du modèle d'apprentissage automatique,
• la réduction d'un écart entre les données de sortie et les données cibles par modification de paramètres du modèle d'apprentissage automatique,
• la réception d'une sortie du modèle entraîné d'apprentissage automatique, la sortie indiquant un dysfonctionnement.

12. Dispositif (1) selon l'une quelconque des revendications 1 à 11, l'identification du dysfonctionnement comprenant :
• l'alimentation de l'image à un modèle entraîné d'apprentissage automatique, le modèle d'apprentissage automatique étant configuré et ayant été entraîné sur la base de données d'entraînement pour attribuer une image à l'une d'au moins deux classes, au moins une classe représentant des images présentant un dysfonctionnement,
• la réception d'une sortie du modèle entraîné d'apprentissage automatique, la sortie indiquant que l'image a été attribuée à une classe représentant des images présentant un dysfonctionnement.

13. Dispositif (1) selon l'une quelconque des revendications 1 à 12, le dysfonctionnement étant un ou plusieurs des dysfonctionnements suivants et/ou étant attribuable à une ou plusieurs des causes suivantes :
• des contaminations dans la zone de collecte,
• une multitude d'arthropodes dans la zone de collecte,
• une formation d'algues dans la zone de collecte,
• une formation de mousse dans la zone de collecte,
• des restrictions dans le champ de vision de la caméra par des animaux et/ou des plantes,
• un encrassement de la caméra et/ou d'éléments optiques de la caméra,
• une source d'éclairage encrassée et/ou défectueuse,
• des réflexions indésirables sur un capteur d'image de la caméra,
• un changement de position et/ou d'orientation de composants du dispositif (1) et/ou du dispositif (1) dans son ensemble,
• une caméra défectueuse.

14. Dispositif (1) selon l'une quelconque des revendications 1 à 13, l'unité de commande étant configurée pour placer le dispositif (1) à des moments définis et/ou à des intervalles de temps définis et/ou lors de la survenance d'événements définis d'un état de repos dans un état actif et pour
• amener la caméra à générer l'image de la zone de collecte,
• identifier le dysfonctionnement du dispositif (1) sur la base de l'image,
• dans le cas où aucun dysfonctionnement n'est présent :
• transmettre l'image via une connexion réseau à un système informatique séparé,
• placer ensuite le dispositif (1) de l'état actif de nouveau dans l'état de repos,
• dans le cas où un dysfonctionnement est présent :
• placer le dispositif (1) dans l'état de dysfonctionnement.

15. Dispositif (1) selon l'une quelconque des revendications 1 à 14, comprenant en outre une unité d'alimentation en énergie, l'unité d'alimentation en énergie comprenant un accumulateur, une cellule solaire, un générateur et/ou une pile à combustible.

16. Dispositif (1) selon l'une quelconque des revendications 1 à 15, la zone de collecte faisant partie d'un dispositif de piégeage d'arthropodes.

17. Procédé mis en œuvre par ordinateur comprenant les étapes de :
• amener une caméra à des moments définis et/ou à des intervalles de temps définis et/ou lors de la survenance d'événements définis à générer une image d'une zone de collecte pour arthropodes, la caméra et la zone de collecte étant des composants d'un dispositif de surveillance d'arthropodes,
• réception d'une image de la caméra,
• analyse de l'image, l'analyse de l'image comprenant la détection, la localisation, l'identification et/ou le comptage d'arthropodes dans l'image,
• identification d'un dysfonctionnement du dispositif (1) sur la base de l'image, le dysfonctionnement conduisant à ce que les arthropodes dans l'image ne puissent plus être correctement détectés, localisés, identifiés et/ou comptés,
• en réponse à l'identification du dysfonctionnement : déclenchement du placement du dispositif (1) dans un état de dysfonctionnement, l'état de dysfonctionnement étant **caractérisé en ce que** les images générées par la caméra ne sont plus analysées.

18. Support de stockage non transitoire lisible par ordinateur, sur lequel est stocké un programme informatique qui, lorsqu'il est exécuté par un dispositif (1) de surveillance d'arthropodes selon la revendication 1, amène l'unité de commande du dispositif (1) à exécuter les étapes suivantes :
• amener la caméra à des moments définis et/ou à des intervalles de temps définis et/ou lors de la survenance d'événements définis à générer une image d'une zone de collecte pour arthropodes,
• réception de l'image de la caméra,
• analyse de l'image, l'analyse de l'image comprenant la détection, la localisation, l'identification et/ou le comptage d'arthropodes dans l'image,
• identification d'un dysfonctionnement du dispositif (1) sur la base de l'image, le dysfonctionnement conduisant à ce que les arthropodes dans l'image ne puissent plus être correctement détectés, localisés, identifiés et/ou comptés,
• en réponse à l'identification du dysfonctionnement : placement du dispositif (1) dans un état de dysfonctionnement, l'état de dysfonctionnement étant **caractérisé en ce que** les images générées par la caméra ne sont plus analysées.
